# FASCICULE DE BREVET EUROPEEN

(11) **EP 4 491 926 B1**
(45) Date de publication et mention de la délivrance du brevet: **12.11.2025**
(21) Numéro de dépôt: 24188426.1
(22) Date de dépôt: 12.07.2024
(51) Int. Cl.: F16L 37/23, F16L 37/34

(54) **ÉLÉMENT DE RACCORD FLUIDIQUE ET RACCORD FLUIDIQUE ASSOCIÉ**
FLUIDANSCHLUSSELEMENT UND FLUIDANSCHLUSS DAFÜR
FLUID CONNECTOR ELEMENT AND ASSOCIATED FLUID CONNECTOR

(30) Priorité: 12.07.2023 FR 2307467
(43) Date de publication de la demande: 15.01.2025
(73) Titulaire: Staubli Faverges, 74210 Faverges-Seythenex (FR)
(72) Inventeur: POLLET, Valentin, 74940 Annecy-le-Vieux (FR); MOREL, Frédéric, 74210 Lathuile (FR); DURIEUX, Christophe, 73200 Gilly sur Isère (FR)
(74) Mandataire: Lavoix

(56) Documents cités:
- DE-C2- 2 626 668
- US-A- 4 949 745
- US-A1- 2020 363 000
- US-B1- 6 776 187

## Description

La présente invention concerne un élément de raccord fluidique, configuré pour être assemblé à un embout complémentaire, et un raccord fluidique comprenant un tel élément de raccord et un embout complémentaire.

Les raccords fluidiques sont des dispositifs de connexion fluidique comprenant un élément de raccord fluidique et un embout complémentaire associé, qui forment respectivement un élément femelle et un élément mâle du raccord fluidique. Chacun des élément et embout du raccord fluidique comprend un passage interne, les passages internes respectifs étant en communication fluidique lorsque le raccord est en configuration accouplée. L'élément de raccord fluidique comprend un dispositif de verrouillage, qui peut s'enclencher automatiquement lorsque l'embout complémentaire est engagé dans l'élément de raccord, de manière à maintenir le raccord en configuration accouplée. Un tel raccord fluidique est parfois appelé simplement raccord automatique. Un dispositif de déverrouillage, généralement une bague, est prévu pour libérer le dispositif de verrouillage et permettre de désaccoupler l'élément de raccord fluidique et l'embout complémentaire.

De manière générale, il est préférable de disposer de raccords fluidiques le plus compacts possible. De plus, dans certaines applications, par exemple pour les canalisations de refroidissement des serveurs informatiques, il est indispensable que l'élément de raccord fluidique soit obturé lorsque le raccord fluidique est en configuration désaccouplée, par exemple au moyen d'un dispositif d'obturation.

EP-2 674 658-A1 décrit, par exemple, un raccord fluidique comprenant une bague de verrouillage déplacée à l'accouplement par des billes d'actionnement de diamètre supérieur au diamètre des billes de verrouillage. L'élément de raccord fluidique n'est que partiellement décrit, Aucun détail n'est donné quant à la structure du corps et aucun dispositif d'obturation n'est présent.

DE 302 3377-A1 décrit, quant à lui, un raccord fluidique automatique avec un élément de raccord fluidique comprenant un corps ménageant des logements 17 allongés, prévus pour recevoir des billes d'actionnement 17'. Les billes d'actionnement 17' sont ensuite maintenues en place par une bague de verrouillage, qui coopère avec un bouchon 18 et un anneau élastique 19, la bague de verrouillage, le bouchon et l'anneau élastique étant montés par l'avant de l'élément de raccord fluidique. Le bouchon et l'anneau élastique sont exposés aux chocs et risquent d'être endommagés de manière prématurée. De plus, une telle structure impose de rallonger l'élément de raccord fluidique vers l'avant, de manière à laisser suffisamment d'espace radial pour le bouchon 18, ce qui en fait une solution peu compacte. De plus ce bouchon constitue une pièce supplémentaire. Aucun dispositif d'obturation n'est décrit.

US-4 949 745-A décrit, quant à lui, un élément de raccord formé de plusieurs éléments empilés les uns avec les autres et maintenus en position par un anneau élastique et des rondelles.

C'est à ces problèmes qu'entend plus particulièrement remédier l'invention, en proposant un raccord fluidique rapide qui soit à la fois étanche en configuration désaccouplée, compact et simple.

À cet effet, l'invention concerne un élément de raccord fluidique, configuré pour être accouplé à un embout complémentaire, l'élément de raccord fluidique comprenant :
- un corps délimitant un conduit interne, le conduit interne s'étendant selon un axe central et étant configuré pour recevoir l'embout complémentaire par une embouchure avant du corps,
- au moins une bille de verrouillage, chaque bille de verrouillage étant respectivement reçue dans un premier logement respectif ménagé dans le corps et étant mobile radialement entre :
   - une position de verrouillage, dans laquelle la ou chaque bille de verrouillage dépasse dans le conduit interne et est apte à retenir l'embout complémentaire dans le corps, et
   - une position de libération, dans laquelle la ou chaque bille de verrouillage ne s'oppose pas au retrait de l'embout complémentaire hors du corps,
- une bague de verrouillage, qui est montée autour du corps et qui comprend une surface de verrouillage, orientée vers l'axe central,
   la bague de verrouillage étant mobile longitudinalement par rapport au corps entre :
   - une position avancée de retenue, dans laquelle la surface de verrouillage maintient chaque bille de verrouillage dans la position de verrouillage, et
   - une position reculée de déverrouillage, dans laquelle chaque bille de verrouillage est libre de se déplacer vers la position de libération,
- un ressort de verrouillage, qui repousse la bague de verrouillage vers la position avancée de retenue,
dans lequel le corps comprend :
- une partie proximale délimitant une portion proximale du conduit interne et une terminaison arrière destinée à être reliée à une canalisation, et
- une partie distale, qui est monobloc et qui délimite :
   - une portion distale du conduit interne et l'embouchure avant, et
   - les premiers logements.

Selon l'invention, la partie proximale est configurée pour être assemblée à la partie distale par emmanchement de la partie distale dans la partie proximale, dans une configuration assemblée du corps dans laquelle aucune surface de la partie proximale ne fait longitudinalement face vers l'arrière à une surface de la partie distale,
alors que l'élément de raccord fluidique comprend aussi un piston, une valve et un ressort de valve, qui sont logés dans le conduit interne, le piston comprenant une collerette proximale qui est intercalée longitudinalement entre la partie distale et la partie proximale, tandis que la valve est mobile par rapport au piston entre :
   - une position avant de fermeture, dans laquelle la valve obture le conduit interne, et
   - une position arrière d'ouverture, dans laquelle la valve autorise le passage de fluide dans le conduit interne, le ressort de valve repoussant la valve vers la position avant de fermeture,
que la partie proximale comprend une gorge interne tandis que la partie distale comprend une gorge externe qui fait au moins partiellement face radialement à la gorge interne lorsque le corps est en configuration assemblée,
et que l'élément de raccord fluidique comprend aussi un obstacle, qui est élastiquement déformable, et qui est, lorsque le corps est en configuration assemblée, partiellement reçu dans la gorge externe de la partie distale et dans la gorge interne de la partie proximale, l'obstacle étant configuré pour coopérer avec une paroi axiale distale de la gorge interne et une paroi axiale proximale de la gorge externe, de manière à empêcher la séparation des parties distale et proximale.

Grâce à l'invention, l'assemblage des deux parties proximale et distale du corps se fait au moyen d'un segment/obstacle déformable élastiquement, et le corps de l'élément de raccord, et par extension le raccord fluidique, est compact radialement, en particulier plus compact que si les parties proximale et distale étaient vissées l'une à l'autre. L'obstacle élastique, logé partiellement dans la gorge externe de la partie distale et partiellement dans la gorge interne de la partie proximale, est protégée des chocs extérieurs, l'élément de raccord et le raccord fluidique associé étant ainsi plus durables. Le piston et la valve assurent l'étanchéité de l'élément de raccord fluidique en configuration désaccouplée.

Selon des aspects avantageux mais non obligatoires de l'invention, un tel élément de raccord fluidique peut incorporer une ou plusieurs des caractéristiques suivantes prises isolément ou selon toute combinaison techniquement admissible :
- L'élément de raccord fluidique comprend au moins une bille d'actionnement, chaque bille d'actionnement étant respectivement reçue dans un deuxième logement ménagé dans la partie distale et étant apte à être repoussée, dans le deuxième logement respectif, par l'embout complémentaire au cours de l'accouplement de l'élément de raccord fluidique et de l'embout complémentaire, de manière à déplacer longitudinalement la bague de verrouillage, à l'encontre du ressort de verrouillage :
   - depuis la position avancée de retenue, où la bague de verrouillage limite le mouvement de chaque bille d'actionnement à une position où chaque bille d'actionnement dépasse radialement de part et d'autre du corps et où la bague de verrouillage est en butée avant contre au moins une bille d'actionnement ou contre le corps, une surface avant de la bague de verrouillage orientée vers l'avant du corps étant en regard longitudinal de la ou chaque bille d'actionnement,
   - vers la position reculée de déverrouillage.
- Chaque deuxième logement présente une forme allongée parallèlement à l'axe central, de sorte que chaque bille d'actionnement est mobile, dans le deuxième logement respectif, au cours de l'accouplement de l'élément de raccord fluidique et de l'embout complémentaire, suivant un mouvement comprenant une composante longitudinale et une composante radiale à l'axe central.
- À l'état libre, l'obstacle a une dimension radiale maximale externe plus grande qu'en configuration assemblée du corps.
- L'obstacle est apte à être entièrement contenu dans la gorge externe.
- Lorsque l'obstacle est en contact avec la paroi axiale distale de la gorge interne, l'obstacle est en contact externe uniquement avec une surface de fond cylindrique de la gorge interne,
   alors qu'en configuration assemblée du corps, la collerette proximale du piston est configurée pour limiter le rapprochement de la partie distale et de la partie proximale à une configuration où l'obstacle est en contact externe uniquement avec la surface de fond cylindrique de la gorge interne.
- L'obstacle est une bague dont une dimension longitudinale est strictement plus grande qu'une épaisseur radiale de la bague à l'état libre, de préférence au moins trois fois plus grande.
- L'obstacle est une bague fendue.
- Aucune surface de la bague de verrouillage ne fait longitudinalement face vers l'arrière à une surface de la partie distale. En position avancée de retenue, la bague de verrouillage est en butée avant directement ou indirectement contre le corps. Une paroi distale de la gorge externe est décalée vers l'arrière par rapport à une surface d'extrémité arrière de la bague de verrouillage lorsque la bague de verrouillage est en position avancée de retenue.
- L'élément de raccord fluidique comprend un premier joint d'étanchéité interposé radialement entre la partie distale et la partie proximale,
   alors que l'obstacle est disposé à l'avant par rapport au premier joint en configuration assemblée du corps.
- L'élément de raccord fluidique comprend :
   - une bague entretoise, qui est intercalée longitudinalement entre la partie distale et la collerette proximale du piston et engagée à jeu radial réduit dans la partie distale,
   - un deuxième joint d'étanchéité, qui coopère avec la valve en position de fermeture et qui logé dans un deuxième logement d'étanchéité délimité par :
      ∘ une paroi distale de la partie distale,
      ∘ une surface de fond de la partie distale, et
      ∘ une surface axiale d'extrémité avant de la bague entretoise.
- Le piston comprend, outre la collerette proximale, une tête distale qui est en regard radial de la valve en position avant de fermeture, un troisième joint étant interposé radialement entre la tête distale et la valve en position avant de fermeture,
   alors que le piston est monobloc,
   et que la valve présente une dimension radiale interne minimale qui est plus grande qu'une dimension radiale externe maximale de la tête distale.
- La partie distale comprend au moins :
   - une première surface radiale externe, au niveau de laquelle débouchent les premiers logements, et
   - une deuxième surface radiale externe, dans laquelle est ménagée la gorge externe, la deuxième surface radiale externe étant située en arrière de la première surface radiale externe et présentant un diamètre strictement inférieur à un diamètre de la première surface radiale externe,
   alors que la dimension externe maximale de l'obstacle en configuration assemblée du corps est strictement inférieure à un diamètre de la première surface radiale externe.
- La partie proximale délimite au moins une première surface radiale interne au niveau de laquelle est formé la gorge interne, alors qu'une dimension longitudinale de la surface radiale interne en avant de la gorge interne est supérieure à une longueur de la gorge externe.
- La bague de verrouillage est partiellement disposée autour de la partie proximale du corps, tandis que le ressort de la bague de verrouillage est interposé entre la partie proximale et la bague de verrouillage.

L'invention concerne aussi un raccord fluidique, comprenant :
- un élément de raccord fluidique tel que décrit précédemment, et
- un embout complémentaire,
dans lequel l'embout complémentaire comprend :
- une gorge de verrouillage, qui est adaptée pour recevoir chaque bille de verrouillage en position de verrouillage en configuration accouplée du raccord fluidique.

L'invention sera mieux comprise, et d'autres avantages de celle-ci apparaîtront plus clairement à la lumière de la description qui va suivre, de plusieurs modes de réalisation d'un élément de raccord fluidique et d'un raccord fluidique, conformes à son principe, donnée uniquement à titre d'exemple et faite en référence aux dessins annexés, dans lesquels :
- [Fig 1] la figure 1 représente, sur cinq inserts a) à e), plusieurs vues ou détails d'un raccord fluidique conforme à un premier mode de réalisation de l'invention, l'insert a) étant une coupe brisée du raccord fluidique représenté dans une configuration désaccouplée, le raccord fluidique comprenant un élément de raccord fluidique et un embout complémentaire ;
- [Fig 2] la figure 2 est une coupe brisée du raccord fluidique de la figure 1, représenté dans une première configuration intermédiaire au cours d'une séquence d'accouplement de l'élément de raccord fluidique et de l'embout complémentaire ;
- [Fig 3] la figure 3 est une coupe brisée du raccord fluidique de la figure 1, représenté dans une deuxième configuration intermédiaire au cours de la séquence d'accouplement ;
- [Fig 4] la figure 4 est une coupe brisée du raccord fluidique de la figure 1, représenté dans une configuration accouplée ;
- [Fig 5] la figure 5 est une coupe brisée du raccord fluidique de la figure 1, représenté dans une configuration déverrouillée, au cours d'une séquence de désaccouplement du raccord rapide ;
- [Fig 6] la figure 6 représente, sur deux inserts a) et b), une vue de côté et une coupe longitudinale de l'élément de raccord fluidique de la figure 1 et d'outils d'assemblage de cet élément de raccord fluidique, qui est représenté dans une configuration intermédiaire au cours de l'assemblage de l'élément de raccord ;
- [Fig 7] la figure 7 représente respectivement, sur deux inserts a) et b), une coupe brisée et un détail de l'élément de raccord fluidique de la figure 1, l'élément de raccord fluidique étant dans une configuration en butée ;
- [Fig 8] la figure 8 est une coupe brisée d'un élément de raccord fluidique conforme à un deuxième mode de réalisation de l'invention ;
- [Fig 9] la figure 9 est une coupe brisée d'un raccord fluidique conforme à un deuxième mode de réalisation de l'invention, le raccord fluidique comprenant l'élément de raccord fluidique de la figure 8 et étant représenté dans une configuration intermédiaire au cours d'une séquence d'accouplement ;
- [Fig 10] la figure 10 est une coupe brisée du raccord fluidique de la figure 9, représenté dans une autre configuration intermédiaire ;
- [Fig 11] la figure 11 est une coupe brisée du raccord fluidique de la figure 9, représenté dans la configuration accouplée ;
- [Fig 12] la figure 12 représente respectivement, sur trois inserts a) à c), une coupe brisée d'un élément de raccord fluidique appartenant à un raccord fluidique conforme à un troisième mode de réalisation de l'invention, une pièce de cet élément de raccord fluidique et un détail à plus grande échelle de l'insert a) ;
- [Fig 13] la figure 13 est une coupe brisée de l'élément de raccord fluidique de la figure 12 et d'outils d'assemblage de l'élément de raccord fluidique, l'élément de raccord fluidique étant représenté dans une configuration intermédiaire au cours de l'assemblage de l'élément de raccord fluidique, et
- [Fig 14] la figure 14 respectivement, sur deux inserts a) et b), une coupe brisée d'un raccord fluidique conforme à un quatrième mode de réalisation de l'invention et un détail à plus grande échelle de l'insert a), le raccord fluidique étant représenté en configuration accouplée.

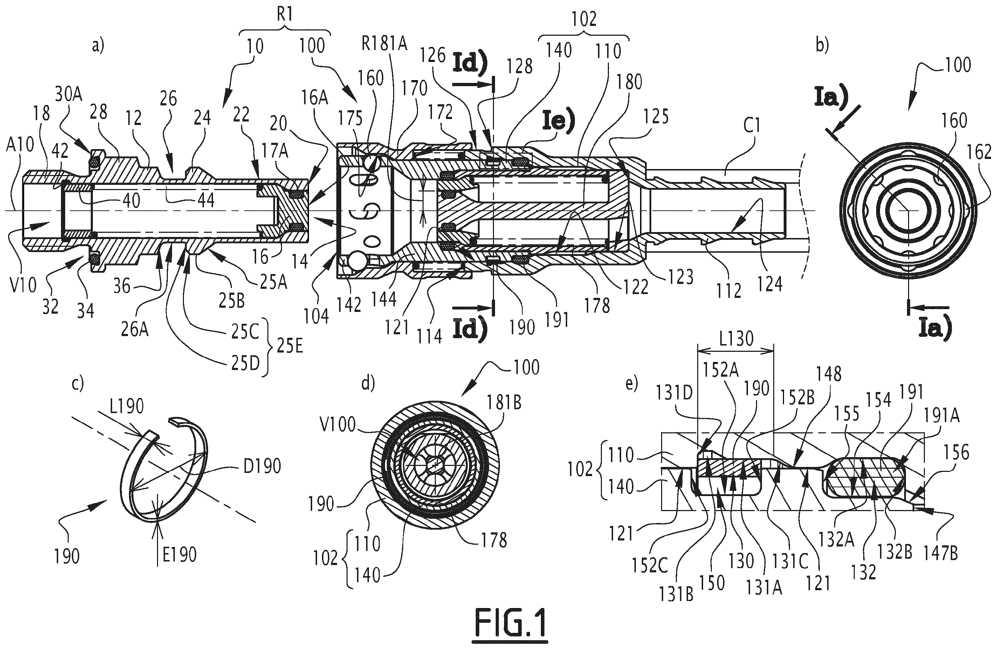

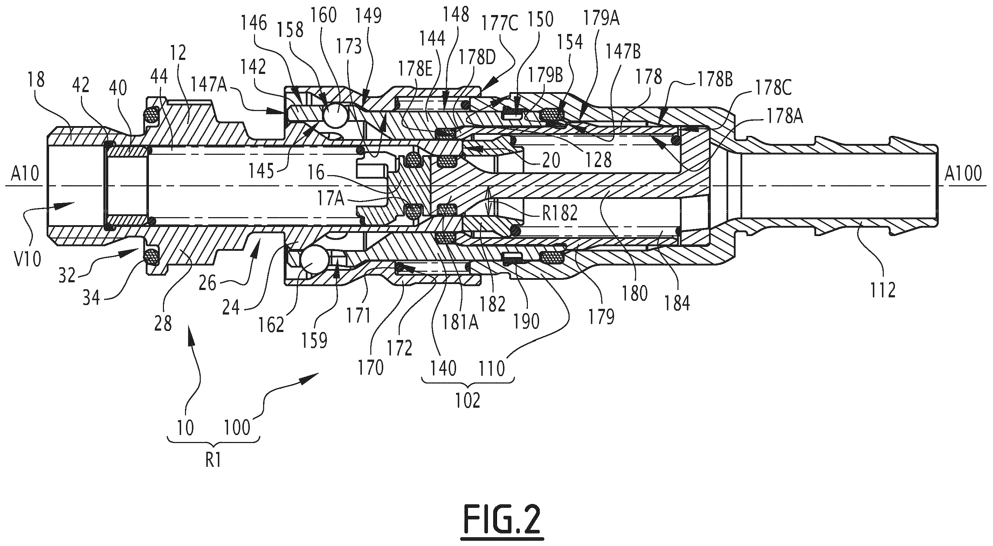

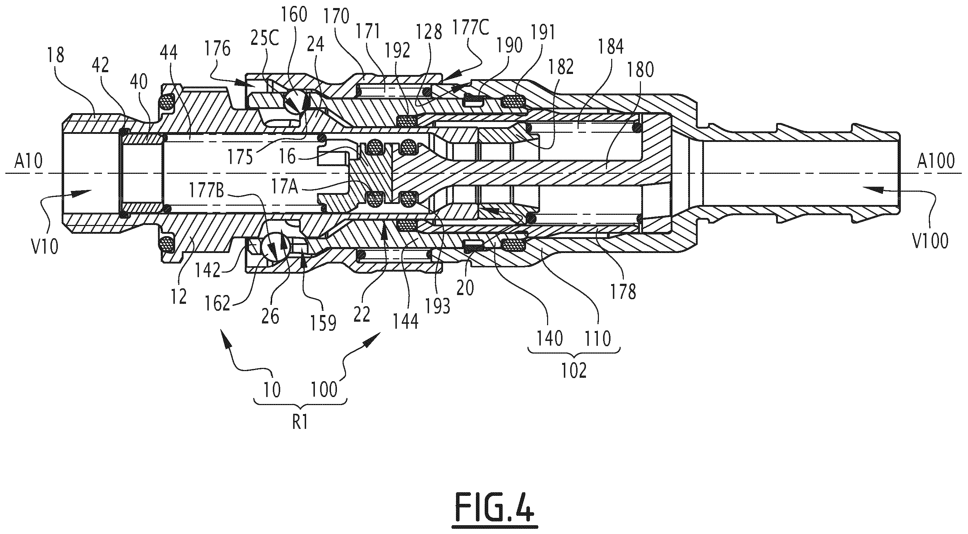

Un raccord fluidique R1, conforme à un premier mode de réalisation, est décrit en référence aux figures 1 à 7. En référence à l'insert a) de la figure 1, le raccord fluidique R1 comprend un élément de raccord fluidique 100, situé sur la droite de l'insert a), et un embout complémentaire 10, situé sur la gauche de l'insert a). L'élément de raccord fluidique 100, aussi appelé élément femelle, est configuré pour être accouplé à l'embout complémentaire 10, aussi appelé élément mâle, selon une séquence d'accouplement du raccord fluidique R1 décrite en référence aux figures 2 à 4. À la fin de la séquence d'accouplement, le raccord fluidique R1 est dans une configuration accouplée, comme représenté sur la figure 4.

En référence à la figure 1a), l'élément de raccord fluidique 100 comprend un côté avant, qui est orienté vers l'embout complémentaire 10 au début de l'accouplement, et un côté arrière situé à l'opposé du côté avant. Le côté avant de l'élément de raccord fluidique 100 est aussi un côté distal de cet élément de raccord fluidique 100, tandis que le côté arrière est un côté proximal de cet élément de raccord fluidique 100. Une surface avant de l'élément de raccord fluidique 100 est tournée vers le côté avant, tandis qu'une surface arrière de l'élément de raccord fluidique 100 est tournée vers le côté arrière. Symétriquement, l'embout complémentaire 10 comprend un côté avant, qui est orienté vers l'élément de raccord fluidique 100 au début de l'accouplement, et un côté arrière situé à l'opposé du côté avant. Le côté avant de l'embout complémentaire 10 est aussi un côté distal de l'embout complémentaire 10, tandis que le côté arrière est un côté proximal de l'embout complémentaire 10.

On décrit tout d'abord l'embout complémentaire 10.

L'embout complémentaire 10 présente globalement une forme de révolution autour d'un axe principal A10. Sauf mention contraire, dans la suite de la description les notions de « radial » ou « axial » pour une surface appartenant à l'embout complémentaire 10 sont en référence à l'axe principal A10. De manière générale, une surface dite « axiale » par rapport à un axe donné est une surface dont la normale en tout point est parallèle à cet axe. Autrement dit une surface axiale est une surface plane, qui est géométriquement portée par un plan orthogonal à cet axe. Une surface radiale est une surface dont la normale en tout point est radiale à cet axe, autrement dit une surface cylindrique de section circulaire centrée sur cet axe.

L'embout complémentaire 10 comprend un corps mâle 12 de forme tubulaire, qui délimite un canal interne V10 s'étendant selon l'axe principal A10. Le canal interne V10 débouche du côté avant par une embouchure 14, qui est sur la figure 1 obturée par une soupape 16 mobile. L'axe principal A10 définit un côté interne de l'embout complémentaire 10.

Du côté arrière, le corps mâle 12 comprend une terminaison arrière 18, où débouche le canal interne V10. La terminaison arrière 18, qui est prévue pour l'assemblage de l'embout complémentaire 10 à un support - non représentée -, est ici filetée. En variante, la terminaison arrière 18 peut être reliée à une canalisation. Dans l'exemple illustré, le corps mâle 12 comprend, d'un côté externe du corps mâle 12 et de l'avant vers l'arrière, une surface axiale d'extrémité avant 20, qui s'étend dans un plan orthogonal à l'axe principal A10, une première portion sensiblement cylindrique qui présente une surface radiale externe terminale 22, une collerette d'actionnement 24, qui s'étend en saillie par rapport à la surface radiale externe terminale 22, une gorge externe de verrouillage 26, une deuxième collerette 28, et enfin la terminaison arrière 18.

La gorge externe de verrouillage 26 présente une surface de fond 26A, qui est ici de forme cylindrique à section circulaire centré sur l'axe principal A10. La gorge externe de verrouillage 26 est délimitée par la collerette d'actionnement 24 du côté avant - ou distal - de la surface de fond 26A, et par la deuxième collerette 28 du côté arrière - ou proximal - de la surface de fond 26A.

La collerette d'actionnement 24 comporte ici, de l'avant vers l'arrière, une surface avant tronconique 25A, qui est centrée sur l'axe principal A10 et qui diverge vers l'arrière du corps mâle 12, une surface intermédiaire 25B cylindrique centrée sur l'axe principal A10, une portion externe tronconique 25C, qui est centrée sur l'axe principal A10 et qui converge vers l'arrière du corps mâle 12, et une portion axiale interne 25D, qui a une forme d'anneau situé dans un plan orthogonal à l'axe principal A10. La portion externe tronconique 25C et la portion axiale interne 25D forment ensemble une paroi proximale 25E de la collerette d'actionnement 24. La paroi proximale 25E délimite ainsi, du côté distal, la gorge externe de verrouillage 26.

La deuxième collerette 28 présente ici une face arrière 30A, qui s'étend radialement à l'axe principal A10 et qui est agencée autour de la terminaison arrière 18. Une gorge frontale 32 est ménagée en creux dans la face arrière 30A, la gorge frontale 32 recevant un joint d'étanchéité 34 pour le montage étanche de la terminaison arrière 18 sur le support. La deuxième collerette 28 présente, du côté avant, une paroi proximale 36, qui est ici inclinée et qui délimite la gorge externe de verrouillage 26 du côté proximal.

L'embout complémentaire 10 comprend aussi une bague interne 40, un circlip 42 et un ressort 44. La bague interne 40 est monté dans le canal interne V10 du corps mâle 12 et est bloquée, sur l'arrière dans le corps mâle 12, par le circlip 42. Le ressort 44 est intercalé entre la soupape 16 et la bague interne 40, de manière à repousser la bague interne 40 vers l'arrière en butée contre le circlip 42, et à repousser la soupape 16 vers l'avant de l'embout complémentaire 10. Dans l'exemple de la figure 1, la soupape 16 est repoussée vers l'avant en butée contre une section rétrécie de l'embouchure 14, la soupape 16 étant dans une position de fermeture.

La soupape 16 est reçue dans le canal interne V10 et est mobile en translation par rapport au corps mâle 12 le long de l'axe principal A10 entre la position de fermeture, dans laquelle la soupape 16 obture de manière étanche le canal interne V10 et une position reculée d'ouverture. À cet effet, l'embout complémentaire 10 comprend avantageusement un joint 17A d'étanchéité, qui est reçu dans une gorge radiale ménagée dans la soupape 16. Le joint d'étanchéité 17A est ainsi interposé radialement entre le corps mâle 12 et la soupape 16 en position de fermeture.

Autrement dit, en position de fermeture du canal interne V10, la soupape 16 est en butée avant contre le corps mâle 12 et coopère de manière étanche avec le corps mâle 12. Lorsque la soupape 16 est repoussée vers l'arrière du corps mâle 12 à l'encontre du ressort 44 et que le passage du fluide dans le canal interne V10 n'est plus empêché, la soupape 16 est dans la position dite reculée d'ouverture. Lorsque la soupape 16 est en position de fermeture, une surface axiale d'extrémité avant 16A de la soupape 16 et la surface axiale d'extrémité avant 20 du corps mâle 12 sont alignées, c'est-à-dire sont sensiblement portées géométriquement par un même plan, qui est ici orthogonal à l'axe principal A10.

De préférence, l'embout complémentaire 10 est conforme aux spécifications dites UQD, acronyme de l'anglais « *Universal Quick Disconnect* » - ou « déconnexion rapide universelle » en français -, établies par la société Intel Corporation.

On décrit à présent l'élément de raccord fluidique 100.

L'élément de raccord fluidique 100 présente globalement une forme de révolution autour d'un axe central A100. Sauf mention contraire, dans la suite de la description, pour une surface appartenant à l'élément de raccord fluidique 100, les notions de « radial », « axial » ou « longitudinal » sont faites en référence à l'axe central A100. L'axe central A100 est ainsi un axe longitudinal de l'élément de raccord fluidique 100. Une direction ou un « côté interne » de l'élément de raccord fluidique 100 est tourné vers l'axe central A100, les notions de « externe », « vers l'extérieur » étant faites en référence à une direction radiale s'éloignant de l'axe central A100.

L'élément de raccord fluidique 100 comprend un corps 102, qui délimite un conduit interne V100, le conduit interne V100 de l'élément de raccord fluidique 100 s'étendant selon l'axe central A100 étant configuré pour recevoir l'embout complémentaire 10 par une embouchure avant 104 du corps 102. Ainsi le conduit interne V100 est aussi un volume de réception de l'embout complémentaire 10. Le corps 102 est aussi dit « corps femelle ». Lorsque l'embout complémentaire 10 est reçu dans l'élément de raccord fluidique 100 en configuration accouplée, comme illustré en figure 4, l'axe central A100 est aligné sur l'axe principal A10, et le canal interne V10 de l'embout complémentaire 10 est fluidiquement connecté au conduit interne V100 de l'élément de raccord fluidique 100.

Le corps 102 comprend ici deux parties, qui sont assemblées l'une à l'autre. Le corps 102 comprend ainsi une partie proximale 110, qui délimite une portion proximale du conduit interne V100 et qui présente une terminaison arrière 112, qui est ici destinée à être reliée à une canalisation C1. La canalisation C1 ne fait pas partie du raccord fluidique R1 mais sert à en préciser le contexte d'utilisation. La partie proximale 110 est monobloc, autrement dit est réalisé d'une seule pièce. Le corps 102 comprend aussi une partie distale 140, qui est monobloc et qui délimite une portion distale du conduit interne V100, la portion distale débouchant sur l'avant par l'embouchure avant 104 de réception de l'embout complémentaire 10. En d'autres termes, une portion avant du corps 02 est formée exclusivement par la partie distale 140 tandis qu'une portion arrière du corps 102 est formée exclusivement par la partie proximale 110, la portion proximale de la partie distale 140 et la portion distale de la partie proximale 110 étant en recouvrement radial pour l'assemblage des parties proximale 110 et distale 140.

La partie proximale 110 est configurée pour être assemblée à la partie distale 140 par emmanchement de la partie distale 140 avec la partie proximale 110, en particulier dans la partie proximale 110, dans une configuration assemblée du corps 102, l'assemblage de la partie proximale 110 à la partie distale 140 étant verrouillé par un obstacle élastiquement déformable. Dans le premier mode de réalisation, l'obstacle est une bague fendue 190, représentée à la figure 1c). Par bague fendue, on entend que la bague comprend une fente qui traverse la bague sur toute son épaisseur radiale et sur toute sa longueur, la bague fendue étant donc discontinue autour de l'axe X100 lorsque le corps 102 est en configuration assemblée.

Du côté avant, la partie proximale 110 présente une surface axiale d'extrémité avant 114, qui a ici une forme d'anneau et s'étend dans un plan orthogonal à l'axe central A100. La partie proximale 110 comprend une surface interne qui est orientée vers l'axe central A100 et qui s'étend à partir la surface axiale d'extrémité avant 114. Ainsi la surface interne de la partie proximale 110 comprend, de l'avant vers l'arrière, une première surface radiale interne 121, une deuxième surface radiale interne 122, une troisième surface radiale interne 123 et une quatrième surface radiale interne 124.

Les première, deuxième, troisième et quatrième surfaces radiales internes 121 à 124 sont reliées deux à deux par des chanfreins et/ou des surfaces axiales, c'est-à-dire des surfaces parallèles à un plan orthogonal à l'axe central A100. La quatrième surface radiale interne 124 est ici ménagée au niveau de la terminaison arrière 112 de la partie proximale 110.

Chacune des première, deuxième, troisième et quatrième surfaces radiales internes 121 à 124 est cylindrique de section circulaire centrée sur l'axe central A100. La deuxième surface radiale interne 122 est située en arrière de première surface radiale interne 121 et présente un diamètre interne inférieur au diamètre de la première surface radiale interne 121. La troisième surface radiale interne 123 est située en arrière de deuxième surface radiale interne 122 et présente un diamètre interne inférieur au diamètre de la deuxième surface radiale interne 122. La quatrième surface radiale interne 124 est située en arrière de troisième surface radiale interne 123 et présente un diamètre interne inférieur au diamètre de la troisième surface radiale interne 123.

La quatrième surface radiale interne 124 est reliée à la troisième surface radiale interne 123 par l'intermédiaire d'une butée axiale avant 125.

Du côté externe, la partie proximale 110 comprend une première surface radiale extérieure 126, qui est une surface cylindrique débouchant vers l'avant sur la surface axiale d'extrémité avant 114 de la partie proximale 110, et une surface axiale de butée 128 disposée à l'arrière de la première surface radiale extérieure 126. Autrement dit la surface axiale de butée 128 est ménagée en retrait de la surface axiale d'extrémité avant 114.

La partie proximale 110 comprend une première gorge interne 130, qui est ménagée en creux au niveau de la première surface radiale interne 121. En référence à la figure 1e), la première gorge interne 130 comprend une surface de fond 131A, qui est cylindrique de section circulaire. Vers l'avant, la première gorge interne 130 est délimitée radialement par un dégagement avant 131B de dimension radiale supérieure au diamètre de la surface de fond 131A. Vers l'arrière, la surface de fond 131A de la première gorge interne 130 est reliée à la première surface radiale interne 121 par un chanfrein 131C. Le dégagement avant 131B est relié à la première surface radiale interne 121 par une paroi axiale distale 131D, qui s'étend partiellement radialement vers l'extérieur, c'est-à-dire de manière centrifuge à l'axe central A100, au-delà de la surface de fond 131A. Le chanfrein 131C fait face longitudinalement à la paroi axiale distale 131D, avec l'obstacle 190 interposé entre le chanfrein 131C et la paroi axiale distale 131D.

La partie proximale 110 comprend aussi une deuxième gorge interne 132, qui est ménagée en creux dans la première surface radiale interne 121 et qui est agencée en arrière de la première gorge interne 130. La deuxième gorge interne 132 comprend une paroi de fond 132A, qui forme une surface radiale interne de la partie proximale 110 et qui est délimitée, sur l'arrière, par une paroi axiale 132B.

La partie distale 140 comprend, du côté avant, une jupe 142 et, du côté arrière, un manchon 144. La jupe 142 présente une forme tubulaire et comprend une surface interne 145, qui est orientée vers l'axe central A100 et qui délimite le conduit interne V100, et une surface externe qui est orientée à l'opposé de la surface interne et qui forme une première surface radiale externe 146 de la partie distale 140. La jupe 142 comprend une surface d'extrémité avant 147A, qui est orientée vers l'avant et qui relie la surface interne 145 à la première surface radiale externe 146. Le manchon 144 comprend une surface axiale d'extrémité arrière 147B, qui est orientée à l'opposé de la surface d'extrémité avant 147A de la jupe 142.

Le manchon 144 comprend une surface externe, qui est située en arrière de la première surface radiale externe 146, qui présente une forme cylindrique de section circulaire et qui forme une deuxième surface radiale externe 148 de la partie distale 140. La deuxième surface radiale externe 148, qui présente un diamètre inférieur à un diamètre de la première surface radiale externe 146, est ici reliée à la première surface radiale externe 146 par un chanfrein 149. Le chanfrein 149 est ainsi une surface tronconique, qui est centrée sur l'axe central A100 et qui diverge vers l'avant de l'élément de raccord fluidique 100.

La partie distale 140 comprend une gorge externe 150, qui est ménagée en creux dans la deuxième surface radiale externe 148. En référence à la figure 1e), la gorge externe 150 comprend un fond 152A et est délimitée longitudinalement par une paroi axiale proximale 152B et une paroi axiale distale 152C. La paroi axiale proximale 152B fait face longitudinalement à la paroi axiale distale 152C, avec l'obstacle 190 interposé entre la paroi axiale proximale 152B et la paroi axiale distale 152C. En arrière de la deuxième surface radiale externe 148 et de la gorge externe 150, la partie distale 140 présente une surface radiale externe terminale 154, qui présente un diamètre inférieur au diamètre de la deuxième surface radiale externe 148. La deuxième surface radiale externe 148 et la surface radiale externe terminale 154 sont reliées par une paroi arrière 155. La surface radiale externe terminale 154 est ici une surface cylindrique de section circulaire, qui débouche longitudinalement sur une surface arrière d'extrémité 156 de la partie distale 140. La surface arrière d'extrémité 156 est un chanfrein sensiblement tronconique, qui relie la surface radiale externe terminale 154 à la surface axiale d'extrémité arrière 147B.

La partie distale 140 et la partie proximale 110 sont assemblées l'une à l'autre sans vissage, sans collage, sous soudure mais par l'intermédiaire de la bague fendue 190. La bague fendue 190 est représentée en configuration libre - ou état libre - sur la figure 1 c), c'est-à-dire qu'aucune force extérieure - mise à part la gravité - ne s'exerce sur la bague fendue 190 et que la bague fendue 190 n'est pas montée dans les parties distale 140 et proximale 110. Sur la figure 1e), la bague fendue 190 est reçue dans la première gorge interne 130, qui présente un diamètre interne légèrement inférieur à un diamètre externe D190 de la bague fendue 190 en configuration libre. La bague fendue 190 est ainsi légèrement comprimée et tend ainsi, par retour élastique, à rester en appui externe contre la surface de fond 131A de la première gorge interne 130. Ainsi, le diamètre interne de la première gorge interne 130 est inférieur, par exemple de l'ordre de 2%, au diamètre externe D190 de la bague fendue 190 en configuration libre. Dans l'exemple illustré, le diamètre interne de la première gorge 130 est égal à 18,61 mm, tandis que le diamètre externe D190 de la bague fendue 190 est égal à 18,97 mm.

De préférence, la bague fendue 190 est réalisé en un matériau métallique, en particulier en acier inoxydable. En variante non représentée, la bague fendue 190 est réalisée en matériau polymère. La bague fendue 190 présente une section prise dans un plan longitudinal qui est rectangulaire et constante sur sa périphérie, une longueur du rectangle définissant une dimension longitudinale L190 de la bague fendue 190, tandis qu'une largeur du rectangle définit une épaisseur radiale E190 de la bague 190. La dimension longitudinale L190 est strictement plus grande que l'épaisseur radiale E190 de la bague fendue 190 à l'état libre, de préférence au moins trois fois plus grande. Dans l'exemple illustré, la longueur L190 est égale à 2,24 mm, tandis que l'épaisseur radiale E190 est égale à 0,61 mm.

L'épaisseur radiale E190 est supérieure à une profondeur de la première gorge interne 130 de la partie proximale 110. La profondeur de la première gorge interne 130 est égale à une différence entre un rayon de la surface de fond 131A et un rayon de la première surface radiale interne 121. Ainsi, lorsque la bague fendue 190 est reçue dans la première gorge interne 130, la bague fendue 190 est en appui externe contre la surface de fond 131A et dépasse de la première surface radiale interne 121 vers l'intérieur.

En configuration assemblée des parties distale 140 et proximale 110, la gorge externe 150 fait face au moins partiellement à la gorge interne 130 dans une direction radiale à l'axe central A100. En d'autres termes, la gorge externe 150 débouche radialement sur la gorge interne 130. La bague fendue 190 est logée partiellement dans la gorge externe 150 de la partie distale 140 et partiellement dans la première gorge interne 130 de la partie proximale 110. Ainsi, lorsque les partie distale 140 et partie proximale 110 tendent à être séparées l'une de l'autre dans la direction longitudinale, la bague fendue 190 coopère avec la paroi distale 131D de la première gorge interne 130 et la paroi axiale proximale 152B de la gorge externe 150 pour s'opposer à ce mouvement de séparation. Le dégagement avant 131B de la gorge interne 130 assure cette coopération surfacique entre la bague fendue 190 et la paroi distale 131D de la première gorge interne 130.

L'épaisseur radiale E190 est inférieure à une profondeur de la gorge externe 150 de la partie distale 140, qui est égale à une différence entre un rayon du fond 152A et un rayon de la deuxième surface radiale externe 148, pour permettre l'assemblage de la partie proximale 110 à la partie distale 140, comme expliqué plus loin.

L'élément de raccord fluidique 100 comprend premier joint d'étanchéité 191, qui est interposé radialement entre la partie distale 140 et la partie proximale 110 en arrière de la bague fendue 190. Plus précisément, le premier joint d'étanchéité 191 est reçu dans un premier logement d'étanchéité 191A qui est délimité, d'une part, par la deuxième gorge interne 132 de la partie proximale 110 et, d'autre part, par la paroi arrière 155 de la partie distale 140 et la surface radiale externe terminale 154 de la partie distale 140. Le premier logement 191A forme ainsi une « gorge ouverte ». La bague fendue 190 est disposée à l'avant par rapport au premier joint 191 en configuration assemblée du corps 102.

La partie distale 140 comprend des premiers logements, ici des logements radiaux 158, et des deuxièmes logements, qui sont des logements allongés 159 dans le premier mode de réalisation de l'invention. Les logements radiaux 158 et allongés 159 sont ménagés au travers de la jupe 142 radialement à l'axe central A100 et débouchent à la fois sur la surface interne 145 et sur la première surface radiale externe 146 de partie distale 140. Les logements radiaux 158 ont ici une section circulaire, tandis que les logements allongés 159 ont ici une section oblongue, agencée parallèlement à l'axe principal A100. Chaque logement allongé 159 est délimité longitudinalement par une paroi distale et par une paroi proximale, qui sont sensiblement alignées selon une direction parallèle à l'axe central A100 et qui limitent le déplacement longitudinal des billes d'actionnement 162 par rapport au corps 102. De préférence, les logements radiaux 158 et les logements allongés 159 sont régulièrement répartis autour de l'axe central A100, de préférence en alternance, de manière à réduire les risques de blocage du raccord fluidique R1.

L'élément de raccord fluidique 100 comprend au moins une bille de verrouillage 160, chaque bille de verrouillage 160 étant reçue dans un logement radial 158 respectif. Lorsque l'élément de raccord fluidique 100 est assemblé, comme représenté sur les dessins, chaque bille de verrouillage 160 est captive du logement radial 158 associé, chaque logement radial 158 débouchant ici sur la surface interne 145 par une ouverture resserrée, qui présente une dimension minimale d'ouverture inférieure à un diamètre de la bille de verrouillage 160 associée. L'élément de raccord fluidique 100 comprend une bague de verrouillage 170, qui est monobloc et qui est disposée autour du corps 102, plus particulièrement partiellement autour des première et deuxième surfaces radiales externes 146 / 148 de la partie distale 140 et autour de la première surface radiale externe 126 de la partie proximale 110, de manière à limiter le mouvement radial des billes de verrouillage 160 du côté de la première surface radiale externe 146. La bague de verrouillage 170, qui est ici partiellement disposée autour de la partie proximale 110 du corps 102, est décrite plus loin.

Chaque bille de verrouillage 160 est ainsi mobile radialement par rapport au corps 102 entre une position radiale interne de verrouillage, dans laquelle la bille de verrouillage 160 considérée dépasse dans le conduit interne V100 de l'élément de raccord fluidique 100 et est apte à retenir l'embout complémentaire 10 reçu dans le conduit interne V100, en s'engageant dans la gorge externe de verrouillage 26, et une position radiale externe de libération, dans laquelle la bille de verrouillage 160 considérée ne s'oppose pas au retrait de l'embout complémentaire 10 hors du conduit interne V100. De préférence, en position radiale externe de libération, les billes de verrouillage 160 ne dépassent pas dans le conduit interne V100.

L'élément de raccord fluidique 100 comprend au moins une bille d'actionnement 162, chaque bille d'actionnement 162 étant reçue dans un logement allongé 159 respectif. Lorsque l'élément de raccord fluidique 100 est assemblé, comme représenté sur les dessins, chaque bille d'actionnement 162 est captive du logement allongé 159 associé, chaque logement allongé 159 débouchant ici sur la surface interne 145 par une ouverture resserrée, qui présente une dimension minimale d'ouverture inférieure à un diamètre de la bille d'actionnement 162 associée. En configuration assemblée du corps 102, du côté de la première surface radiale externe 146, le mouvement radial des billes d'actionnement 162 vers l'extérieur est limité par la bague de verrouillage 170.

Chaque bille d'actionnement 162 reçue dans le logement allongé 159 associé est ainsi mobile, par rapport au corps 102, radialement et longitudinalement par rapport à l'axe central A100.

Les logements radiaux 158 et allongés 159 retiennent les billes de verrouillage 160 ou d'actionnement 162 associées, dans leur déplacement radial vers l'axe longitudinal central A100. Avantageusement, les billes de verrouillage 160 sont identiques les unes aux autres, et les billes d'actionnement 162 sont identiques les unes aux autres. De préférence, les billes d'actionnement 162 présentent un diamètre qui est strictement supérieur à un diamètre des billes de verrouillage 160.

On décrit à présent la bague de verrouillage 170.

La bague de verrouillage 170 présente une forme de révolution autour de l'axe central A100 et coopère avec le corps 102, de manière que la bague de verrouillage 170 est mobile en translation le long de l'axe central A100, par rapport au corps 102, et notamment par rapport à la partie distale 140. L'élément de raccord fluidique 100 comprend aussi un ressort de verrouillage 171, qui est ici interposé entre la bague de verrouillage 170 et la surface axiale d'extrémité avant 114 de la partie proximale 110 du corps 102, de manière à repousser la bague de verrouillage 170 vers l'avant du corps 102. Plus précisément, le ressort de verrouillage 171 est en appui contre une surface arrière de butée 172 de la bague de verrouillage 170, la surface arrière de butée 172 étant une surface axiale, orientée vers l'arrière. Cet agencement limite l'encombrement radial de l'élément de raccord fluidique 100.

De l'arrière vers l'avant, la surface arrière de butée 172 est reliée à une surface radiale interne 173, qui est située radialement en regard de la deuxième surface radiale externe 148 de la partie distale 140 et qui contribue au guidage en translation de la bague de verrouillage 170 le long du corps 102.

La surface radiale interne 173 est reliée, vers l'avant, à une surface inclinée 174, qui est ici une surface tronconique centrée sur l'axe central A100 et qui diverge vers l'avant de l'élément de raccord fluidique 100.

La surface inclinée 174 est reliée, vers l'avant, à une surface de verrouillage 175, qui est ici une surface cylindrique de section circulaire centrée sur l'axe central A100.

Du côté avant de la surface de verrouillage 175, la bague de verrouillage 170 comprend une rainure 176, qui est ménagée en creux par rapport à la surface de verrouillage 175. La rainure 176 comprend ici un fond 177A, de forme cylindrique à section circulaire centrée sur l'axe central A100, et une surface avant 177B, qui relie la surface de verrouillage 175 au fond 177A de la rainure 176. La surface avant 177B est inclinée par rapport aux directions radiale et longitudinale du corps 102, et délimite la rainure 176 sur l'arrière. La surface avant 177B est ici une surface tronconique, qui est centrée sur l'axe central 100 et qui diverge vers l'avant de l'élément de raccord fluidique 100.

En configuration assemblée du corps 102, du côté de la surface interne 145, le mouvement radial des billes d'actionnement 162 vers l'intérieur est limité par l'ouverture resserrée des logements allongés 159, à une configuration dans laquelle la surface avant 177B est située en regard longitudinal des billes d'actionnement 162. La surface avant 177B est configurée pour venir, en position avancée de retenue, indirectement en butée avant contre le corps 102, c'est-à-dire en butée contre le corps 102 par l'intermédiaire de la ou des billes d'actionnement 162, lesquelles sont elles-mêmes en butée avant contre la paroi distale des logements allongés 159 de la partie distale 140, limitant ainsi vers l'avant le mouvement de translation de la bague de verrouillage 170 par rapport au corps 102. La bague de verrouillage 170 est alors dans une position dite « avancée » de retenue, comme illustré aux figures 1, 2 et 4. La surface inclinée 174 est alors située en regard radial du chanfrein 149 de la partie distale 140. Le ressort de verrouillage 171 tend ainsi à repousser la bague de verrouillage 170 vers la position avancée de retenue. Lorsque la bague de verrouillage 170 est en position avancée de retenue, les billes d'actionnement 162 dépassent radialement de part et d'autre de la partie distale 140 du corps. Plus précisément, les billes d'actionnement 162 dépassent radialement de part et d'autre de la jupe 142 de la partie distale 140. En d'autres termes, les billes d'actionnement 162 sont disposées partiellement dans le volume de réception V100 et partiellement dans la rainure 176 de la bague de verrouillage 170. La surface de verrouillage 175 recouvre radialement et maintient les billes de verrouillage 160 en position de verrouillage.

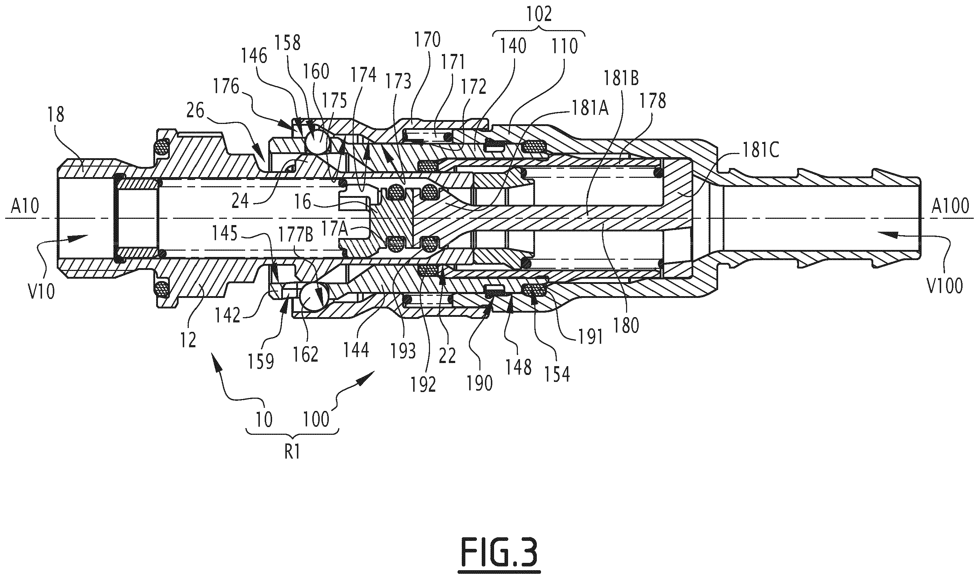

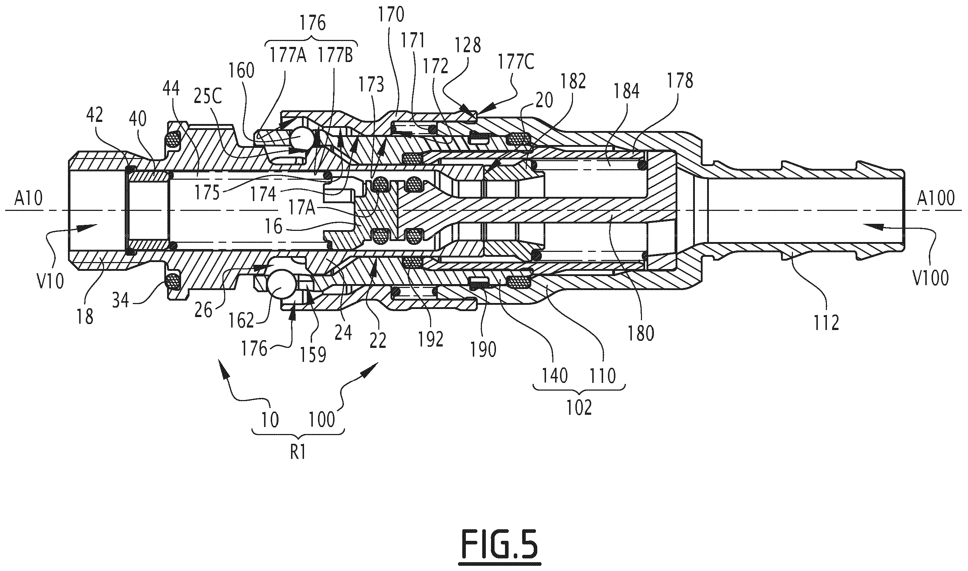

À partir de la position avancée de retenue, la bague de verrouillage 170 est déplaçable vers l'arrière, par exemple sous l'action d'un opérateur déplaçant directement la bague de verrouillage 170 vers l'arrière à l'encontre du ressort de verrouillage 171, par exemple pour désaccoupler le raccord fluidique R1. Dans l'exemple illustré à la figure 5, le mouvement vers l'arrière de la bague de verrouillage 170 est limité par la mise en butée arrière d'une surface axiale d'extrémité arrière 177C de la bague de verrouillage 170 contre la surface axiale de butée 128 ménagée sur la partie proximale 110. Autrement dit la surface axiale d'extrémité arrière 177C forme une surface de butée arrière de la bague de verrouillage 170. Lorsque la bague de verrouillage 170 est au contact de la surface axiale de butée 128, comme visible à la figure 5, la bague de verrouillage 170 recouvre radialement les billes d'actionnement 162 de telle façon que les billes d'actionnement 162 ne peuvent s'extraire complètement des logements allongés 159. On comprend qu'au cours du déplacement longitudinal de la bague de verrouillage 170 depuis la position avancée de retenue vers l'arrière, la surface de verrouillage 175 se décale progressivement par rapport aux billes de verrouillage 160, jusqu'à ce que la surface de verrouillage 175 ne recouvre plus les billes de verrouillage 160, le mouvement radial des billes de verrouillage 160 centrifuge à l'axe central A100 n'étant alors plus empêché par la bague de verrouillage 170. Autrement dit, la bague de verrouillage 170 autorise les billes de verrouillage 160 à se déplacer en position de libération, la bague de verrouillage 170 étant dans une position reculée de déverrouillage, comme représenté sur les figures 3 et 5.

Dans la position de déverrouillage, la rainure 176 est alors radialement alignée avec les billes de verrouillage 160 et configurée pour accueillir partiellement les billes de verrouillage 160 en position de libération.

L'élément de raccord fluidique 100 comprend aussi une bague entretoise 178, qui est reçue dans le volume interne V100 et qui est intercalée longitudinalement entre la partie distale 140 et la partie proximale 110. La bague entretoise 178 est ici engagée dans la partie distale 140 et dans la partie proximale 110 avec un jeu radial réduit.

La bague entretoise 178 présente une forme globalement tubulaire avec un côté interne 178A de forme globalement cylindrique orienté vers l'axe principal A100, un côté externe 178B orienté à l'opposé du côté interne 178A, une surface axiale d'extrémité arrière 178C, qui est orientée vers l'arrière et qui relie le côté interne 178A au côté externe 178B.

La bague entretoise 178 comprend, au niveau d'une extrémité avant, un renflement 178D, qui forme une saillie annulaire par rapport au côté interne 178A et ménage une surface axiale d'extrémité avant 178E de l'entretoise 178. La surface axiale d'extrémité avant 178E présente ici une forme d'anneau, orienté vers l'avant.

La bague entretoise 178 comprend une protubérance 179, qui est ménagée en saillie sur le côté externe 178B. La protubérance 179 ménage une troisième surface radiale externe 179A et une surface axiale de butée 179B tournée vers l'avant. La troisième surface radiale externe 179A, qui est ici une surface sensiblement cylindrique de section circulaire, est délimitée à l'avant par la surface axiale de butée 179B. La protubérance 179 est décalée vers l'arrière par rapport à la partie distale 140 en configuration assemblée des parties distale et proximale, de sorte que la troisième surface radiale externe 179A est située en regard radial de la deuxième surface radiale interne 122 de la partie proximale 110, et que la surface axiale de butée 179B est située en regard de la surface axiale d'extrémité arrière 147B de la partie distale 140. Ainsi, la surface axiale de butée 179B est apte à venir en butée avant contre la surface axiale d'extrémité arrière 147B de la partie distale 140 en configuration assemblée des parties distale 140 et proximale 110.

L'élément de raccord fluidique 100 comprend aussi un piston 180, qui est reçu dans le conduit interne V100, une valve 182, qui présente une forme tubulaire et qui est mobile autour du piston 180, et un ressort de valve 184.

Le piston 180 est monobloc et comprend une tête distale 181A, une tige intermédiaire 181B et une collerette proximale 181C. Le piston 180 s'étend le long de l'axe central A100 dans le conduit interne V100. La collerette proximale 181C dépasse radialement de la tige intermédiaire 181B et est percée de plusieurs passages pour le fluide dans le conduit interne V100. En configuration assemblée de l'élément de raccord fluidique 100, la collerette proximale 181C est logée en regard radial de la troisième surface radiale interne 123 de la partie proximale 110.

La valve 182 présente globalement une forme d'anneau et est agencée autour de la tête distale 181A et de la tige intermédiaire 181B. La valve 182 comprend une surface radiale interne 183A, qui est orientée vers l'axe central A100, une surface radiale externe 183B, qui est orientée à l'opposé de la surface radiale interne 183A, et une surface d'extrémité avant 183C qui relie la surface radiale interne 183A à la surface radiale externe 183B et qui est orientée vers l'avant.

La valve 182 est mobile autour du piston 180, entre une position avant de fermeture, dans laquelle la valve 182 obture le conduit interne V100, et une position arrière d'ouverture dans laquelle la valve 182 autorise le passage de fluide dans le conduit interne V100. Plus précisément, en position avant de fermeture, la surface radiale externe 183B de la valve 182 coopère de manière étanche avec le corps 102, via un deuxième joint d'étanchéité 192, tandis que la surface radiale interne 183A de la valve 182 coopère de manière étanche avec la tête distale 181A du piston via un troisième joint 193, qui est ici logé dans la tête distale 181 du piston 180 et qui est interposé radialement entre la tête distale 181A et la valve 182. En position avant de fermeture, la valve 182 est en regard radial de la tête distale 181.

La valve 182 présente une dimension radiale interne minimale R182 qui est plus grande qu'une dimension radiale externe maximale R181A de la tête distale 181A, de sorte que la tête distale 181A n'interfère pas avec les mouvements de translation de la valve 182 par rapport au piston 180 le long de l'axe central A100.

La valve 182 est représentée en position avant de fermeture sur les figures 1 et 2, et en position arrière d'ouverture sur les figures 3, 4 et 5.

Dans le premier mode de réalisation, le deuxième joint d'étanchéité 192 est reçu dans un deuxième logement d'étanchéité 192A, qui est délimité, d'une part, par la surface axiale d'extrémité avant 178E de l'entretoise 178 et, d'autre part, par un lamage formé sur le côté interne de la partie distale 140, le lamage formant une surface de fond 192B et une paroi distale 192C du deuxième logement d'étanchéité 192A. La surface axiale d'extrémité avant 178E forme ainsi une paroi proximale de la gorge 192A. Le deuxième logement d'étanchéité 192A recevant le deuxième joint d'étanchéité 192 est ainsi une « gorge ouverte ».

En position arrière d'ouverture, la valve 182 est longitudinalement décalée de la tête distale 181A et des deuxième et troisième joints 192 et 193, autorisant le passage de fluide dans le conduit interne V100. Les deuxième et troisième joints 192 / 193 sont sensiblement disposés au même niveau le long de l'axe central A100, autrement dit sont alignés selon un plan orthogonal à l'axe central A100.

Le ressort de valve 184 est interposé entre la valve 182 et la collerette proximale 181C du piston 180, le ressort de valve 184 tendant, par retour élastique, à repousser la valve 182 vers la position avant de fermeture. En configuration désaccouplée de l'élément de raccord fluidique 100, comme illustré à la figure 1a), la valve 182 est repoussée en position de fermeture par le ressort de valve 184. Dans cette position de fermeture, la valve 182 est en butée avant contre la bague entretoise 178. Plus précisément, la valve 182 est en butée contre le renflement 178D de la bague entretoise 178 et repousse bague entretoise 178 en butée avant contre la partie distale 140. Autrement dit, la valve 182 n'est pas en butée avant contre le piston 180 mais est indirectement en butée avant contre la partie distale 140.

De préférence, lorsque la valve 182 est en position de fermeture, une surface d'extrémité avant du piston 180 et une surface d'extrémité avant de la valve 182 sont alignées.

En configuration assemblée de la partie distale 140 et de la partie proximale 110 du corps 102, la collerette proximale 181C du piston 180 est intercalée longitudinalement entre la partie proximale 110 et la partie distale 140 dans la mesure où la collerette proximale 181C fait longitudinalement face vers l'arrière à la butée axiale avant 125 de la partie proximale 110 et vers l'avant à la surface axiale d'extrémité arrière 178C de la bague entretoise 178, la bague entretoise 178 faisant elle-même longitudinalement face vers l'avant à la surface axiale d'extrémité arrière 147B de la partie distale 140, ce qui limite une position longitudinale de la collerette proximale 181C et de la bague entretoise 178 dans le corps 102. Une position longitudinale du piston 180 dans le corps 102 est ainsi limitée.

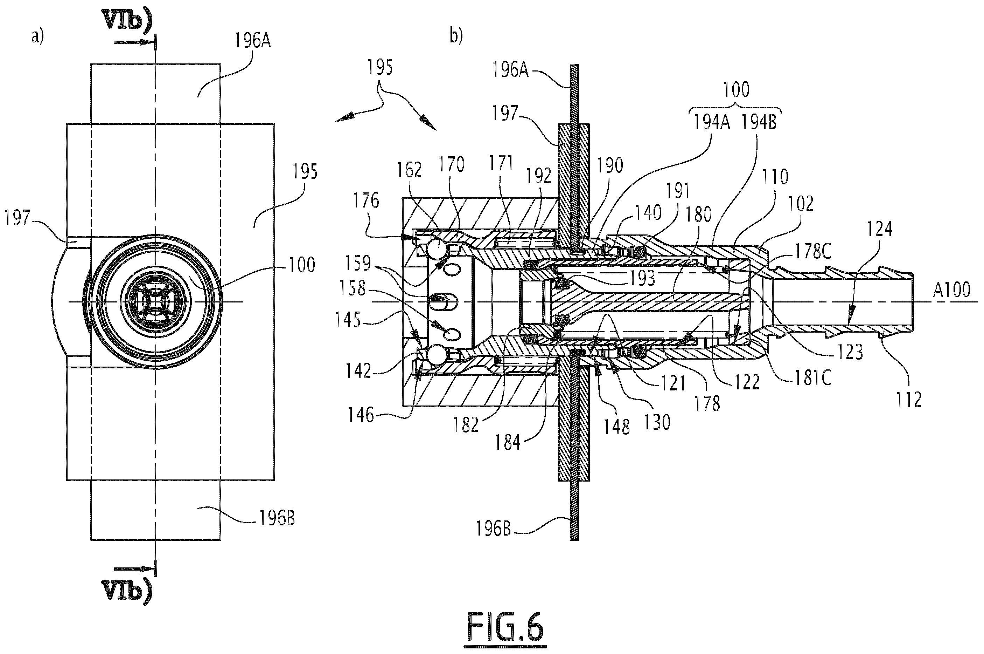

La surface axiale de butée 128 ménagée sur la partie proximale 110 pour la bague de verrouillage 170 est disposée à l'avant de la paroi axiale proximale 152B de la gorge externe 150. Quelle que soit la position longitudinale relative de la partie distale 140 et de la partie proximale 110 du corps 102 du fait des jeux longitudinaux limités entre la collerette proximale 181C, la bague entretoise 178, la partie proximale 110 et la partie distale 140, la bague entretoise 178 est apte à coopérer uniquement avec des surfaces axiales de la partie distale 140 et de la partie proximale 110. Avantageusement, aucune surface de la partie proximale 110 et aucune surface de la bague de verrouillage 170 ne fait longitudinalement face, dans la direction arrière, à une surface de la partie distale 140, ce qui permet un assemblage de la bague de verrouillage 170 et de la partie proximale 110 autour de la partie distale 140 par l'arrière de la partie distale 140, comme décrit ci-après en référence à la figure 6.

Pour l'assemblage du corps 102, on forme un sous-ensemble avant 194A, qui inclut la partie distale 140, et un sous-ensemble arrière 194B, qui inclut la partie proximale 110. L'assemblage du sous-ensemble avant 194A au sous-ensemble arrière 194B forme l'élément de raccord fluidique 100.

Le sous-ensemble avant 194A inclut ainsi, outre la partie distale 140, la bague de verrouillage 170, les billes de verrouillage 160 et d'actionnement 162, le ressort de verrouillage 171, la bague fendue 190. Les billes de verrouillage 160 et d'actionnement 162 sont mises en place dans leurs logements respectifs 158 et 159 au niveau de la première surface radiale externe 146, puis la bague de verrouillage 170 et le ressort de verrouillage sont mis en place autour de la partie distale 140, par l'arrière de la partie distale 140.

La bague fendue 190 est logée dans la gorge externe 150 de la partie distale 140, la bague fendue 190 étant maintenue comprimée radialement dans la gorge externe au moyen d'un outillage 195, de sorte que la bague fendue 190 ainsi comprimée est entièrement contenue dans la gorge externe 150. L'outillage 195 ne fait pas partie du raccord fluidique R1 mais sert à en expliquer le contexte d'utilisation, en particulier l'assemblage.

Dans l'exemple illustré, l'outillage 195 comprend plusieurs plaques, qui sont simplement découpées. L'outillage 195 comprend ainsi un premier outil formé de deux demi-coquilles 196A et 196B, qui présentent chacune une découpe en demi-cercle avec un rayon interne sensiblement égal à un rayon externe de la bague fendue 190 comprimée, de préférence égal à un rayon externe de la deuxième surface radiale externe 148. En variante non illustré, le premier outil comprend une plaque avec une découpe en forme de U.

Les deux demi-coquilles 196A et 196B sont configurées pour s'écarter / se rapprocher radialement à l'axe central A100 et coopèrent l'une avec l'autre pour comprimer la bague fendue 190 dans la gorge externe 150, de manière à ce que la bague fendue 190 soit totalement contenue dans la gorge externe 150. À cet effet, la dimension radiale maximale de la bague fendue 190 en configuration comprimée est inférieure ou égale à un diamètre de la deuxième surface radiale externe 148 de la partie distale 140. La mise en compression de la bague fendue 190 dans la gorge externe 150 a pour avantage également de centrer la bague fendue 190 par rapport à la partie distale 140.

Avantageusement, pour assurer une bonne répartition des forces sur la bague fendue 190, les deux demi-coquilles 196A / 196B recouvrent radialement la bague fendue 190 sur au moins un tiers de sa longueur L190. Il est donc nécessaire que la surface axiale d'extrémité arrière 177C de la bague de verrouillage 170, lorsque celle-ci est en position avancée de retenue, soit distante vers l'avant par rapport à la paroi distale 152C de la gorge externe 150, de manière à permettre la mise en place de l'outillage 195. Autrement dit la paroi distale 152C de la gorge externe 150 est décalée vers l'arrière par rapport à la surface d'extrémité arrière 177C de la bague de verrouillage 170 lorsque la bague de verrouillage 170 est en position avancée de retenue. De préférence, une distance entre la surface axiale d'extrémité arrière 177C de la bague de verrouillage 170, lorsque celle-ci est en position avancée de retenue, et la paroi distale 152C de la gorge externe 150 est au moins égale à la longueur L190 de la bague fendue 190.

L'outillage 195 comprend aussi une deuxième plaque 197, qui forme une butée axiale au ressort de verrouillage 171.

Le deuxième joint 192 est introduit dans la partie distale 140, par l'arrière de la partie distale 140. La bague entretoise 178 est insérée partiellement dans la partie distale 140 jusqu'à venir en butée avant contre la surface axiale d'extrémité arrière 147B de la partie distale 140. La surface axiale d'extrémité avant 178E de la bague entretoise 178 forme alors la paroi proximale du logement d'étanchéité 192A recevant le deuxième joint 192, tandis que la surface de fond 192B et la paroi distale 192C du logement d'étanchéité 192A sont formées sur la partie distale 140. La valve 182 est ensuite engagée par l'arrière de la bague entretoise 178 jusqu'à venir en butée contre la bague entretoise 178.

Le ressort de valve 184 est engagé dans le sous-ensemble avant 194A, précisément dans la bague entretoise 178 au contact de la valve 182.

On forme également le sous-ensemble arrière 194B, qui inclut la partie proximale 110, le premier joint 191 mis en place dans la deuxième gorge interne 132 de la partie proximale 110, le piston 180 équipé du troisième joint 193, qui sont introduits par le côté avant de la partie proximale 110. La structure monobloc du piston 180 facilite la mise en place du tiroir 182 et du piston 180 dans les sous-ensembles 194A et 194B.

Le sous-ensemble avant 194A et le sous-ensemble arrière 194B sont rapprochés l'un de l'autre parallèlement à l'axe central A100. Le ressort de valve 184 vient en appui contre la collerette proximale 181C du piston 180. La portion distale de la partie proximale 110 s'engage autour de la bague entretoise 178 puis autour de la portion proximale de la partie distale 140. La première surface radiale interne 121 s'engage autour de la deuxième surface radiale externe 148 puis autour de la gorge externe 150, qui accueille la bague fendue 190 comprimée par l'outillage 195. Une dimension longitudinale L121 de la première surface radiale interne 121 en avant de la première gorge interne 130, supérieure à une longueur L150 de la gorge externe 150, permet à la partie proximale 110 de rester centrée sur la partie distale 140 alors que la première surface radiale interne 121 recouvre la gorge externe 150. Puis la surface axiale avant d'extrémité 114 de la partie proximale 110 vient en butée longitudinale contre l'outillage 195, comme illustré sur à la figure 6.

L'outillage 195 est alors retiré. Par retour élastique, la bague fendue 190 vient en appui radial contre la première surface interne 121, en avant de la première gorge interne 130. Le premier joint 191 est ensuite comprimé dans son logement par la mise en place de la surface radiale externe terminale 154 radialement en face de la deuxième gorge interne 132. Dans le même temps, la deuxième surface radiale interne 122 de la partie distale 140 vient en coopération à jeu radial réduit avec la troisième surface radiale externe 179A de la bague entretoise 178.

Alors que le mouvement de rapprochement du sous-ensemble avant 194A et du sous-ensemble arrière 194B se poursuit, la partie proximale 110 progresse vers l'avant de la partie distale 140 jusqu'à mettre la partie proximale 110 en butée avant contre le piston 180, lui-même en butée avant contre la bague entretoise 178, elle-même en butée avant contre la surface arrière d'extrémité 147B de la partie distale 140. Dans cette position de butée, la totalité de la longueur de la bague/obstacle 190 fait face radialement à la première gorge interne 130 et la bague fendue 190 est donc libre de se déformer élastiquement. Comme le diamètre maximal D190 de la bague fendue 190 à l'état libre est strictement inférieur au diamètre de la surface de fond 131A cylindrique, la bague 190 se déforme élastiquement jusqu'à venir en butée radiale vers l'extérieur contre la surface de fond 131A cylindrique de la première gorge interne 130. L'obstacle 190 a donc à l'état libre une dimension radiale maximale externe, qui correspond au diamètre maximal D190, plus grande qu'en configuration assemblée du corps 102.

Lorsque toute action d'assemblage cesse sur la partie proximale 110 et la partie distale 140, le ressort de valve 184 tend à repousser le piston 180 et la partie proximale 110 vers l'arrière par rapport à la partie distale 140 et à la bague entretoise 178, la valve 182 étant en butée avant contre la bague entretoise 178. Ce mouvement correspond à un mouvement de séparation des parties distale 140 et proximale 110, la bague fendue 190 étant intercalée entre la paroi axiale distale 131D de la première gorge interne 130 et la paroi axiale proximale 152B de la gorge externe 150, ce qui bloque ce mouvement de séparation.

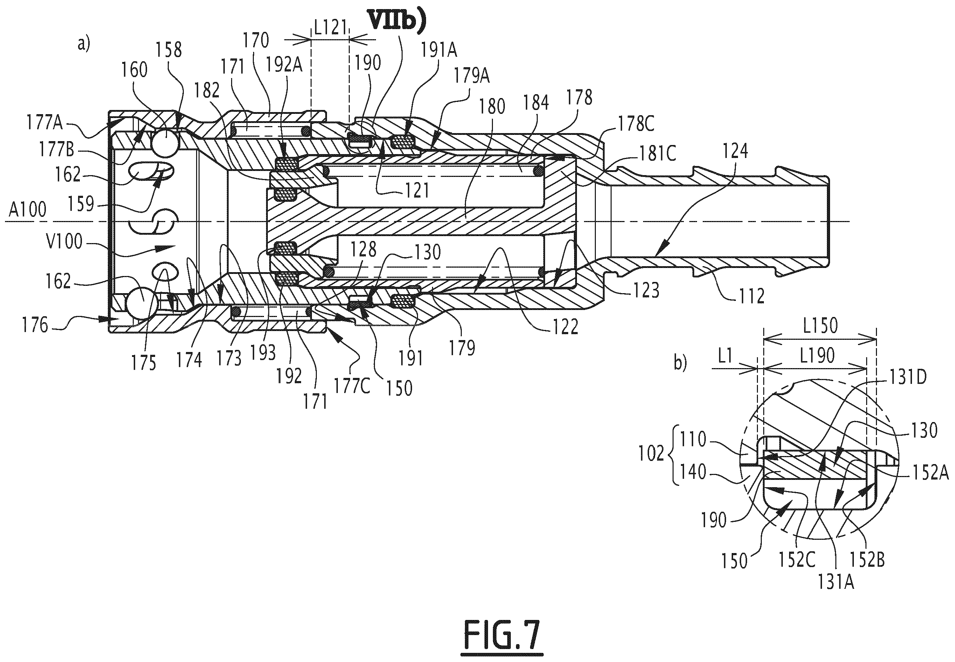

La configuration de la bague fendue 190 et la géométrie de la première gorge interne 130 rendent indémontable l'assemblage entre partie distale 140 et partie proximale 110. En référence à la figure 7, l'élément femelle 100 est représenté dans une configuration en butée, dans laquelle la partie proximale 110 est rapprochée de la partie distale 140 à l'encontre du ressort de valve 184, jusqu'à ce que la partie proximale 110 soit indirectement en butée contre la partie distale 140. L'assemblage de la partie distale 140 et de la partie proximale 110 est fait avec une surcourse L1 de rapprochement entre la partie distale 140 et la partie proximale 110, la surcourse L1 correspondant aux dispersions d'une distance longitudinale entre la paroi axiale distale 131B de la gorge externe 150 et la surface axiale d'extrémité arrière 178C de la bague entretoise 178 lorsque la bague entretoise 178 est en butée avant contre la partie distale 140, de la dimension longitudinale de la collerette proximale 181C du piston 180 et de la distance longitudinale entre la paroi distale 131D de la première gorge interne 130 et la butée axiale avant 125 ménagée sur la partie proximale 110 pour le piston 180. Une longueur L130 entre l'extrémité arrière de la surface de fond 131A cylindrique de la première gorge interne 130 et la paroi distale 131D de la première gorge interne 130 est supérieure à la somme de la longueur L190 de la bague 190 et de la surcourse L1 de rapprochement.

En configuration assemblée du corps 102, la deuxième surface radiale externe 148 fait radialement face à la première surface radiale interne 121.

Le montage de la bague de verrouillage 170 par l'arrière de la partie distale 140 et le montage de la partie proximale 110 autour de la partie distale 140 permettent une compacité radiale maximale et évitent les pièces supplémentaires.

On décrit à présent une séquence d'accouplement du raccord fluidique R1, en référence aux figures 1 à 4.

Alors que le raccord fluidique R1 est initialement en configuration désaccouplée, comme illustré en figure 1a), l'axe principal A10 de l'embout complémentaire 10 est aligné sur l'axe central A100 de l'élément de raccord fluidique 100, puis l'embout complémentaire 10 est rapproché de l'élément de raccord fluidique 100 selon l'axe central A100 et est introduit par l'embouchure avant 104 dans le volume interne V100.

En référence à la figure 2, le piston 180 vient en contact avec la soupape 16 et le corps mâle 12 de l'embout complémentaire 10 vient en contact avec la valve 182, la soupape 16 et la valve 182 étant chacune repoussées vers leur position respective d'ouverture lorsque le mouvement d'accouplement se poursuit. La surface radiale externe terminale 22 du corps mâle 12 parvient au contact du deuxième joint d'étanchéité 192, ce qui assure l'étanchéité des conduits internes mâle V10 /femelle V100 vis-à-vis de l'extérieur du corps mâle 12 et du corps 102 de l'élément de raccord fluidique 100. La surface avant tronconique 25A de la collerette d'actionnement 24 parvient en contact avec les billes d'actionnement 162, qui sont ainsi repoussées dans les logements allongés 159, alors que la surface avant tronconique 25A reste à distance longitudinale des billes de verrouillage 160. Ce mouvement des billes d'actionnement 162 s'accompagne d'un mouvement de recul de la bague de verrouillage 170 puisque les billes d'actionnement 162 sont en contact avec la surface avant 177B. Les billes de verrouillage 160 entrent à leur tour en contact avec la surface avant tronconique 25A et se déplacent radialement vers l'extérieur dans la rainure 176 de la bague de verrouillage 170, à présent en regard radial des billes de verrouillage 160 puisque la bague de verrouillage 170 a été déplacée vers l'arrière par les billes d'actionnement 162.

Les soupape 16 et valve 182 poursuivent leur mouvement vers leur position reculée d'ouverture, tandis que les billes d'actionnement 162 parviennent ensuite en butée arrière contre la paroi proximale de leur logement allongé 159, puis sont déplacées radialement vers l'extérieur dans la rainure 176 de manière à laisser le passage radial pour la collerette d'actionnement 24. Les billes d'actionnement 162 ont repoussé la bague de verrouillage 170 au moins jusqu'à la position reculée de déverrouillage. Le raccord rapide R1 est alors dans la configuration de la figure 3. Dans cette configuration, les billes de verrouillage 160 peuvent atteindre leur position de libération dans la rainure 176 de la bague de verrouillage 170.

Avec la poursuite du mouvement de rapprochement des corps mâle 12 et femelle 102, la gorge de verrouillage 26 parvient en regard radial des billes de verrouillage 160, qui peuvent se déplacer radialement vers l'intérieur en position de verrouillage, sous l'effort élastique du ressort de verrouillage 171 qui repousse la bague de verrouillage 170, laquelle revient en position avancée de retenue. Le raccord rapide R1 est alors dans la configuration accouplée, comme illustré à la figure 4. Dans cette configuration accouplée, les billes de verrouillage 160 sont recouvertes radialement par la surface de verrouillage 175 et maintenues en position de verrouillage, dans laquelle les billes de verrouillage 160 coopèrent avec la portion externe tronconique 25C de la collerette d'actionnement 24, de manière à retenir l'embout complémentaire 10 dans la partie distale 140 du corps femelle 102. La bague de verrouillage 170 est en butée avant contre les billes d'actionnement 162, qui ont été ramenées sous l'effort élastique de la bague de verrouillage 170 en butée avant contre les parois distales des logements allongés 159.

Le canal interne V10 de l'embout complémentaire 10 et le conduit interne V100 de l'élément de raccord fluidique 100 communiquent fluidiquement, le fluide pouvant s'écouler de l'un vers l'autre. Seule la portion du conduit interne V100 disposée du côté arrière du deuxième joint d'étanchéité 192 est susceptible d'être au contact du fluide transitant dans l'élément de raccord 100. Le verrouillage de l'élément de raccord 100 avec de l'embout complémentaire 10 est automatique, dans la mesure où la seule manoeuvre de rapprochement de l'élément de raccord 100 et de l'embout complémentaire 10 provoque le verrouillage. Le raccord fluidique R1 est dit « rapide » dans la mesure où aucun outil n'est nécessaire pour le verrouillage et le déverrouillage de l'élément de raccord fluidique 100 et de l'embout complémentaire 10.

On décrit une séquence de désaccouplement du raccord fluidique R1, en référence aux figures 4 et 5.

Le raccord fluidique R1 est initialement en configuration accouplée. Pour le désaccouplement, la bague de verrouillage 170 est déplacée vers l'arrière par un opérateur au moins jusqu'à sa position reculée de déverrouillage, jusqu'à venir en butée arrière contre surface axiale de butée 128 du corps 102 d'élément de raccord fluidique 100. La rainure 176 fait alors radialement face aux billes de verrouillage 160 et d'actionnement 162, les billes de verrouillage 160 et d'actionnement 162 étant alors libres de dégager le passage radial pour la collerette d'actionnement 24, et donc pour l'embout complémentaire 10, qui peut être retiré hors de l'élément de raccord fluidique 100 selon un mouvement de séparation opposé au mouvement de rapprochement. Les soupape 16 et valve 182 reprennent chacune leur position avant de fermeture, chacune étant repoussée par le ressort correspondant 44 ou 184.

Une fois que l'embout complémentaire 10 est dégagé du conduit interne V100, lorsque la bague de verrouillage 170 est relâchée, l'élément de raccord fluidique 100 reprend sa configuration désaccouplée, avec la bague de verrouillage 170 en position avancée de retenue, en butée avant contre les billes d'actionnement 162, elles-mêmes en butée avant contre la paroi distale des logements allongés 159, les billes de verrouillage 160 étant repoussées en position interne de verrouillage.

Le raccord rapide R1 procure plusieurs avantages.

Grâce à l'assemblage au moyen d'un segment/obstacle déformable élastiquement, ici la bague fendue 190, le corps 102 est compact radialement, en particulier plus compact que si les parties proximale et distale étaient vissées l'une à l'autre. La bague fendue 190, logée partiellement dans la gorge externe 150 de la partie distale 140 et partiellement dans la première gorge interne 130 de la partie proximale 110, est protégée des chocs extérieurs, l'élément de raccord fluidique 100 étant ainsi plus durable.

En configuration assemblée du corps 102, la collerette proximale 181C du piston 180 limite le rapprochement de la partie distale 140 et de la partie proximale 110 à une configuration où la bague fendue 190 est en contact externe uniquement avec la surface de fond 131A cylindrique de la gorge interne 130. Quelle que soit la position longitudinale relative des partie distale 140 et proximale 110 tolérée par l'assemblage par obstacle 190, la bague fendue 190 coopérant vers l'avant uniquement avec la paroi axiale distale 131D, vers l'arrière uniquement avec la paroi axiale proximale 152B et vers l'extérieur uniquement avec la surface de fond cylindrique 131A de la première gorge interne 130, la bague fendue 190 ne peut être déformée vers l'intérieur, et l'assemblage de la partie proximale 110 à la partie distale 140 est non démontable, c'est-à-dire sécurisé. L'assemblage se fait en une seule opération, ce qui est particulièrement rapide et pratique. En comparaison, si les parties proximale et distale étaient vissées l'une à l'autre, il faudrait également bloquer l'assemblage pour le sécuriser, par exemple par collage.

La bague fendue 190 étant simplement déformée pour permettre l'assemblage du corps 102, l'outillage 195 est simple et économique à produire, l'outillage 195 étant facile à mettre en place sur le premier sous-ensemble 194A, puis facile à retirer, ce qui limite les usinages nécessaires sur les parties proximale 110 et distale 140 pour l'assemblage, ce qui contribue à la compacité et au contrôle des coûts de fabrication. La géométrie fendue de l'obstacle 190 favorise la déformation de l'obstacle 190. La déformation de l'obstacle 190 par réduction du diamètre externe de l'obstacle 190 entre l'état libre et l'état assemblé dans les parties proximale 110 et distale 140 permet un assemblage compact radialement. Le diamètre externe de l'obstacle 190 restant inférieur au diamètre externe de la partie distale au niveau des premiers et deuxième logements, le corps 102 est également compact radialement.

La bague fendue 190 pouvant être entièrement contenue dans la gorge externe 150 pour le montage, les parties proximale 110 et distale 140 peuvent être montées à jeu radial réduit, pour plus de compacité radiale. Avantageusement, lors de l'assemblage, la coopération de la première surface radiale interne 121 et de la deuxième surface radiale externe 148, avant que la partie proximale 110 ne recouvre la bague fendue 190, permet de centrer et guider les parties proximale 110 et distale 140, en évitant les coincements et les efforts de frottement de la bague fendue 190 sur la partie proximale 110.

Le positionnement du premier joint 191 en arrière de l'obstacle 190 permet à l'élément de raccord fluidique 100 d'être plus compact axialement.

Les parties proximale 110 et distale 140 peuvent être de matières différentes, ces matières n'ayant pas de contrainte de compatibilité - comme cela serait le cas pour des assemblages par soudure -.

L'assemblage par bague fendue 190 logée dans des gorges périphériques externe 150 et interne 130 permet à la partie proximale 110 et à la partie distale 140 d'être mobiles l'une par rapport à l'autre autour de l'axe central A100, ce qui permet par exemple d'accommoder les éventuels mouvements et/ou déformations de la canalisation C1.

Le montage des premier et deuxième joints 191 et 192 en gorge ouverte limite les risques d'accumulation de copeaux d'usinage dans ces gorges, ce qui augmente la durée de vie des joints qui y sont reçus.

Les logements allongés 159 pour les billes d'actionnement 162 permettent aux billes de verrouillage 160 de ne pas avoir à repousser la bague de verrouillage 170 au cours de l'accouplement, ce qui réduit les risques de blocage au cours de l'accouplement du raccord fluidique R1.

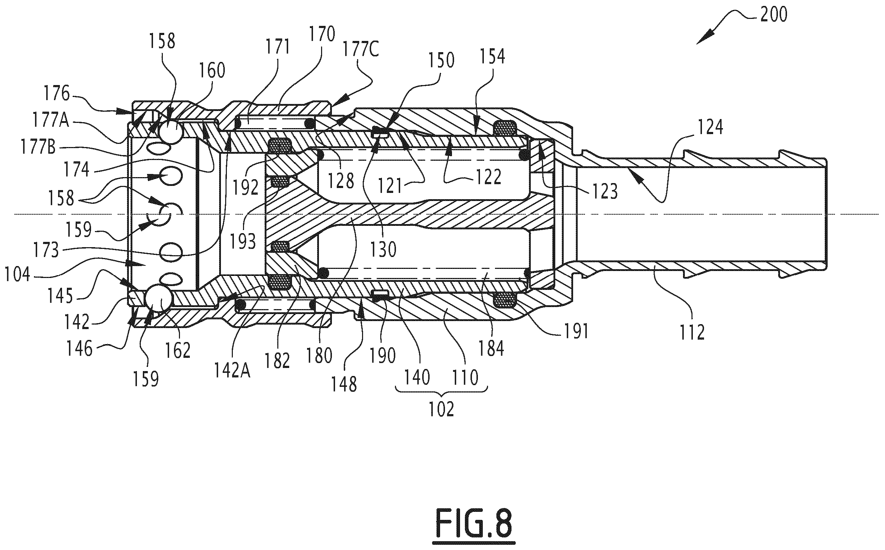

Des modes de réalisation alternatifs de l'invention sont illustrés aux figures 8 à 14. Dans les modes de réalisation alternatifs de l'invention, les éléments analogues à ceux des autres modes de réalisation portent les mêmes références et fonctionnent de la même façon. Dans ce qui suit, on décrit principalement les différences entre chaque mode de réalisation et le ou les précédents.

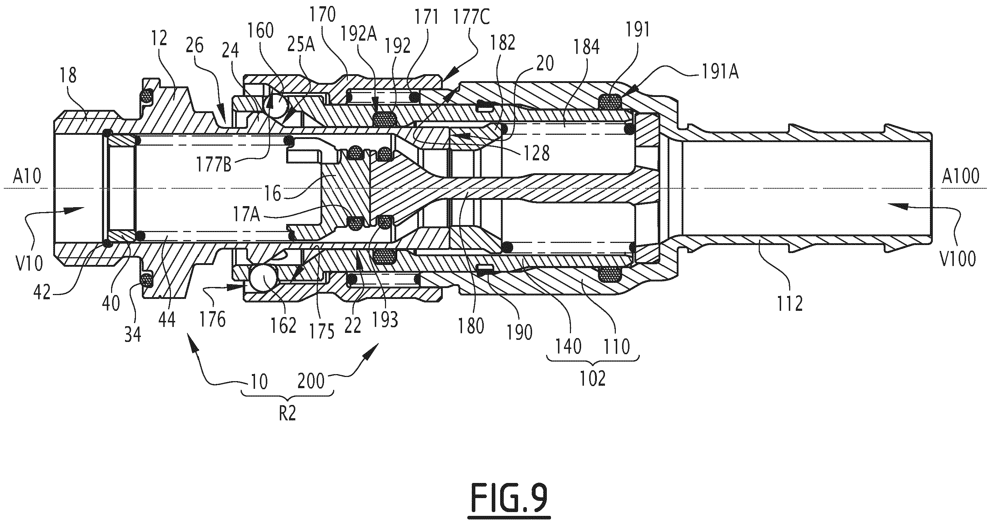

Un raccord fluidique R2, conforme à un deuxième mode de réalisation de l'invention, est représenté aux figures 8 à 11. Le raccord fluidique R2 comprend un élément de raccord fluidique 200, qui est représenté isolé à la figure 8, tandis que l'élément de raccord fluidique 200 et l'embout complémentaire 10 sont représentés aux figures 9 à 11, qui illustrent une séquence d'accouplement de l'élément de raccord fluidique 200 à l'embout complémentaire 10. Une des principales différences avec l'élément de raccord fluidique 100 du premier mode de réalisation est que dans le deuxième mode de réalisation, les billes d'actionnement 162 sont reçues dans des deuxièmes logements 259 qui ne sont pas allongés, mais uniquement radiaux. De plus, l'élément de raccord fluidique 200 du deuxième mode de réalisation ne comprend pas de bague entretoise 178.

De plus, les premiers et deuxième joints 191 et 192 sont respectivement reçus dans des premier et deuxième logements d'étanchéité 191A et 192A qui ne sont pas des « gorges ouvertes » mais qui sont ici des « gorges fermées », directement ménagées respectivement dans la partie distale 140 et la partie proximale 110. Plus précisément, le premier logement d'étanchéité 191A est ménagé en creux dans la deuxième surface radiale interne 122, en regard de la surface radiale externe terminale 154 de la partie distale 140. Dans ce mode de réalisation, en l'absence de bague entretoise, la surface radiale externe terminale 154 forme une troisième surface radiale externe de la partie distale 140, cette troisième surface radiale externe étant sensiblement complémentaire à la deuxième surface radiale interne 122 de la partie proximale 110 et coopérant à jeu radial réduit avec la deuxième surface radiale interne 122 en configuration assemblée du corps 102.

Comme illustré à la figure 8, la valve 182 en position de fermeture est directement en butée avant contre la partie distale 140 du corps 102.

En référence à la figure 9, lors de l'accouplement, la collerette d'actionnement 24 repousse les billes d'actionnement 162 radialement, les billes d'actionnement 162 venant en contact de la surface avant 177B de la bague de verrouillage 170 et repoussant la bague de verrouillage 170 longitudinalement vers l'arrière, jusqu'à ce la collerette d'actionnement 24 parvienne au contact des billes de verrouillage 160 et s'introduise sous les billes d'actionnement 162.

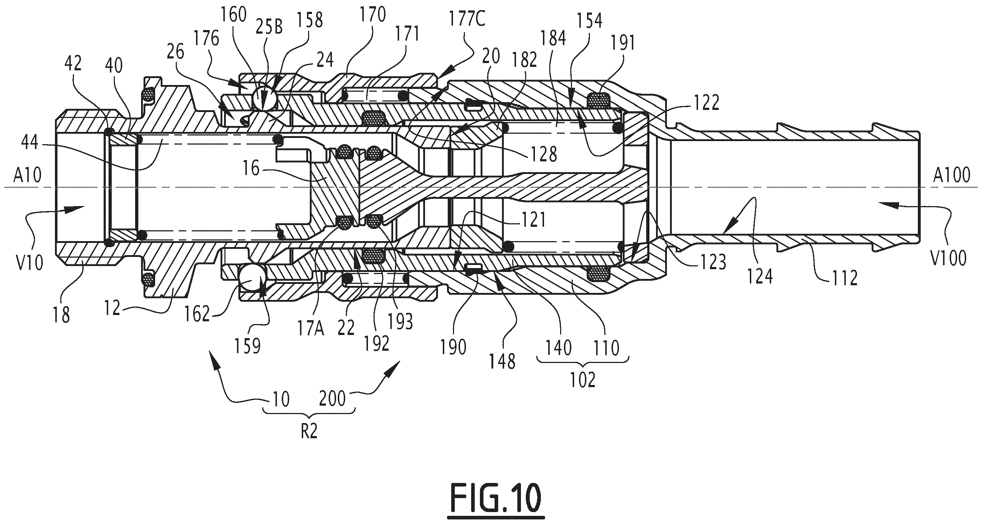

En partant de la configuration de la figure 9, alors que le mouvement d'accouplement se poursuit, la collerette d'actionnement 24 repousse les billes de verrouillage 160 vers leur position de libération, selon un mouvement radial vers l'extérieur, c'est-à-dire centrifuge à l'axe principal A100. Ce mouvement radial met en contact les billes de verrouillage 160 avec la surface avant 177B et entraîne la bague de verrouillage 170 vers l'arrière vers la position reculée de déverrouillage jusqu'à ce que la rainure 176 permette aux billes de verrouillage 160 d'atteindre leur position de libération. La collerette d'actionnement 24 s'introduit alors sous les billes de verrouillage 160, comme illustré à la figure 10.

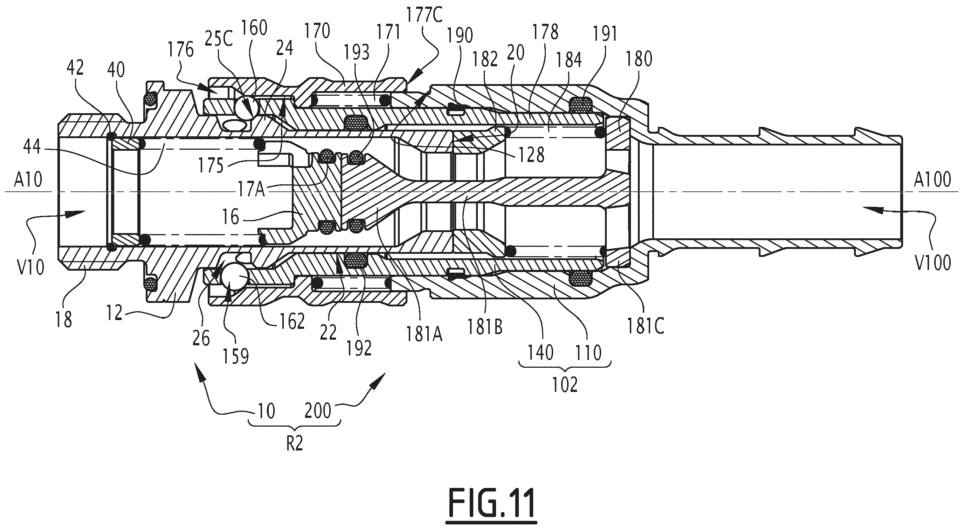

Alors que le mouvement d'accouplement se poursuit, la gorge de verrouillage 26 vient au niveau des billes d'actionnement 162, lesquelles sont libres de s'engager dans la gorge de verrouillage 26. Ensuite, lorsque la gorge de verrouillage 26 est au niveau des billes de verrouillage 160, celles-ci s'engagent dans la gorge de verrouillage 26. La bague de verrouillage 170 est alors repoussée vers sa position avancée de retenue par le ressort de verrouillage 171, et la surface de verrouillage 175 vient recouvrir les billes de verrouillage 160 en position de verrouillage, verrouillant le corps mâle 12. Le raccord fluidique R2 est alors dans la configuration accouplée, comme illustré à la figure 11. Dans le deuxième mode de réalisation, en configuration désaccouplée, lorsque la bague de verrouillage 170 est en position avancée de retenue, la bague de verrouillage 170 est en butée avant directement contre le corps 102, précisément en butée avant contre un épaulement 142A de la partie distale 140 - et non pas contre les billes d'actionnement 162, comme c'est le cas dans le premier mode de réalisation -, ce qui limite le déplacement de la bague de verrouillage 170 vers l'avant par rapport au corps 102.

Pour le désaccouplement du raccord fluidique R2, la bague de verrouillage 170 est tirée par l'opérateur en arrière à l'encontre du ressort de verrouillage 171 jusque dans la position reculée de déverrouillage, les billes de verrouillage 160 et d'actionnement 162 étant libres de s'écarter dans la rainure 176, libérant ainsi le passage pour le corps mâle 12 hors du corps femelle 102.

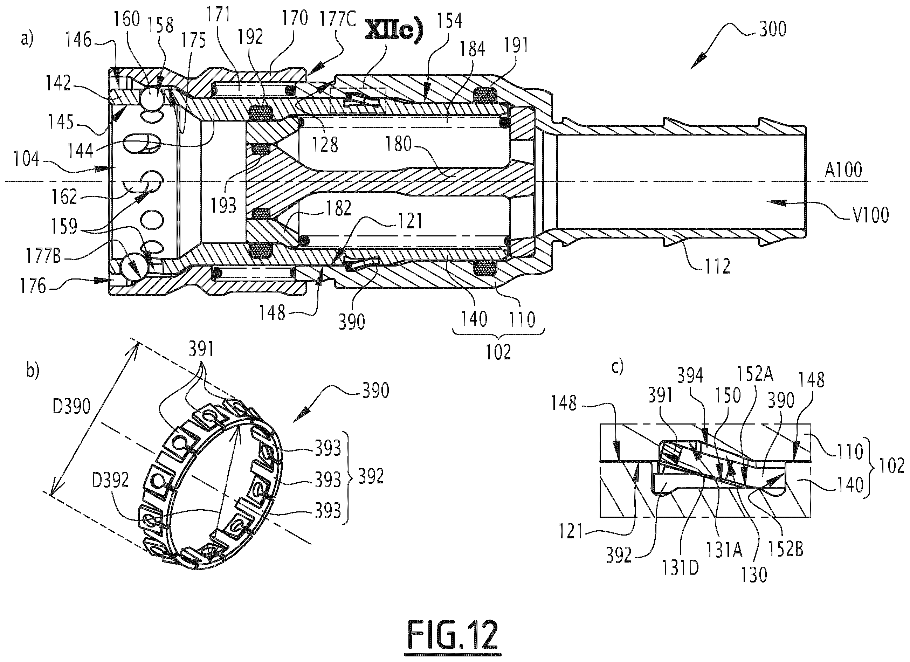

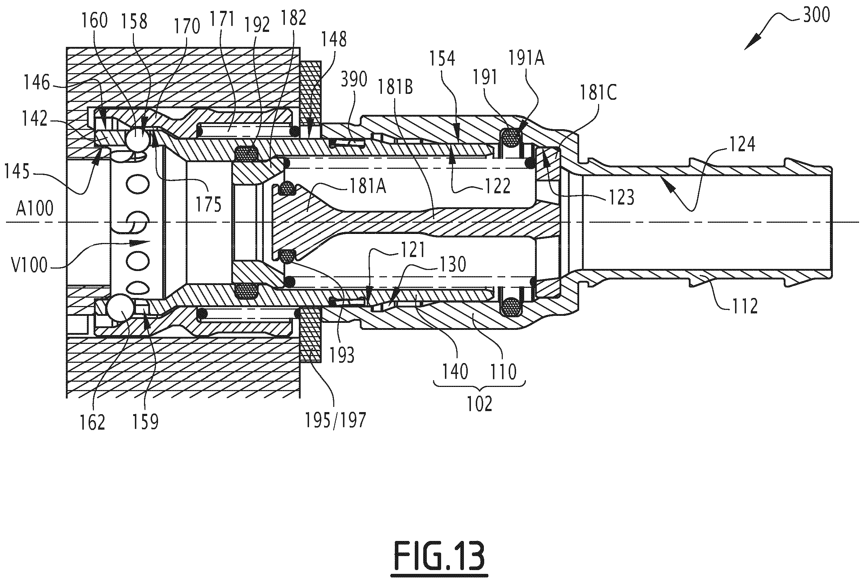

Un élément de raccord fluidique 300 appartenant à un raccord fluidique conforme à un troisième mode de réalisation de l'invention, est représenté aux figures 12 et 13.

Alors que dans les premier et deuxième modes de réalisation, l'obstacle élastique servant à l'assemblage de la partie proximale 110 et de la partie distale 140 est une bague fendue 190, dans le troisième mode de réalisation, l'obstacle élastique servant à l'assemblage de la partie proximale 110 et de la partie distale 140 est une bague 390, qui est réalisé en métal et qui comprend des dents déformables élastiquement, par flexion.

En référence à l'exemple de la figure 12b), la bague 390 est par exemple fabriquée en ménageant des encoches et des perçages dans une bague initialement cylindrique centrée sur un axe de bague A390, de manière à détourer des dents 391, ici chacune de forme sensiblement parallélépipédique, et une portion cylindrique 392, qui est ici formée par une succession d'éléments 393 en forme de T. Chaque dent 391 est rattachée à la portion cylindrique 392 par un côté avant, tandis qu'un côté arrière de chaque dent 391 est éloigné de l'axe de bague A390, de manière à induire une déformation plastique du matériau au niveau de la jonction entre chaque dent 391 et la portion cylindrique 392. Comme illustré sur la figure 12c), les formes des première gorge interne 130 et première gorge externe 150 sont modifiées en conséquence pour coopérer avec la bague 390.

Dans l'exemple illustré, au cours du montage de la partie distale 140 et de la partie proximale 110, la bague 390 est tout d'abord positionnée dans la gorge externe 150, avant d'introduire le sous-ensemble comprenant la partie distale 140 et la bague 390 au sous-ensemble comprenant la partie proximale 110.

Sur la figure 12b), la bague 390 est représentée dans une configuration libre, dans laquelle aucune force extérieure - mis à part éventuellement la gravité - ne s'applique à la bague 390. Les dents 391 sont géométriquement portées par un cône qui est centré sur l'axe de bague A390 et qui diverge vers l'arrière de la bague 390. En configuration libre de la bague 390, la portion cylindrique 392, et par extension la bague 390, présente un diamètre interne D392, qui est égal à une valeur minimale. La valeur minimale du diamètre interne D392 est sensiblement égale à un diamètre du fond 152A de la gorge externe 150, comme illustré à la figure 12c).

On comprend que la deuxième surface radiale externe 148 de la partie distale 140 présente un diamètre externe supérieur à la valeur minimale du diamètre interne D392 de la bague 390. Avantageusement, la géométrie de la bague 390, avec des encoches régulières réparties autour de l'axe de bague A390, permet d'élargir la bague 390 par déformation élastique, autrement dit permet d'augmenter le diamètre interne D392, de manière à autoriser le montage de la bague 390 dans la gorge externe 150 de la partie distale 140 à partir de l'arrière de la partie distale 140 du corps 102. Une fois la bague 390 alignée longitudinalement avec la gorge externe 150, la bague 390 revient, par retour élastique, vers sa configuration libre, la portion cylindrique 392 étant essentiellement reçue dans la gorge externe 150, tandis que les dents 391 dépassent, radialement vers l'extérieur, de la gorge externe 150. L'axe de bague A390 est alors aligné avec l'axe central A100.

Ensuite, lors du montage de la partie proximale 110 autour de la partie distale 140, la première surface radiale interne 121 de la partie proximale 110 déforme élastiquement les dents 391 en flexion vers l'axe central A100. La bague 390 est alors entièrement contenue dans la gorge externe 150. Les dents 391 se re-déploient, par retour élastique, dès lors que la gorge interne 130 est en regard radial de toute la longueur des dents 391 de la bague 390. Les parties proximale 110 et distale 140 sont alors dans une configuration assemblée, comme illustré à la figure 12c). À l'inverse des modes de réalisation précédents, dans le troisième mode de réalisation, aucun outillage n'est nécessaire pour maintenir l'obstacle dans la gorge externe 150 au cours du montage du corps 102.

En configuration assemblée des parties proximale 110 et distale 140, lorsqu'un mouvement de séparation est appliqué sur les parties proximale 110 et distale 140, la bague 390 coopère à la fois avec la paroi axiale distale 131D de la gorge interne 130 et avec la paroi axiale proximale 152B de la gorge externe 150, pour empêcher la séparation. Plus précisément, les dents 391 coopèrent avec la paroi axiale distale 131D, tandis que la portion cylindrique 392 coopère avec la paroi axiale proximale 152B, ce qui bloque le mouvement de séparation des parties proximale 110 et distale 140.

La bague 390 est également en contact externe avec la surface de fond 131A.

Lorsqu'un mouvement de rapprochement a lieu dans la limite donnée par le montage avec piston 180 entre les parties proximale 110 et distale 140, un jeu dimensionnel 394 est ménagé entre la bague 390 et la gorge interne 130, de sorte que la bague 390 n'est pas davantage déformée radialement vers l'intérieur. Dans l'exemple illustré, dans ce mouvement de rapprochement, la bague 390 coopère simplement avec la surface de fond cylindrique 131A de la gorge interne 130. En variante non représentée, en configuration assemblée des parties proximale 110 et distale 140, les dents 391 ne touchent pas la surface de fond cylindrique 131A de la première gorge interne 130. En d'autres termes, un diamètre externe maximal D390 de la bague 390, pris au niveau de l'extrémité des dents 391, à l'état libre de la bague 390, est inférieur au diamètre de la surface de fond 131A.

L'accouplement et le désaccouplement de l'élément de raccord fluidique 300 avec l'embout complémentaire 10 sont identiques aux modes de réalisation précédents.

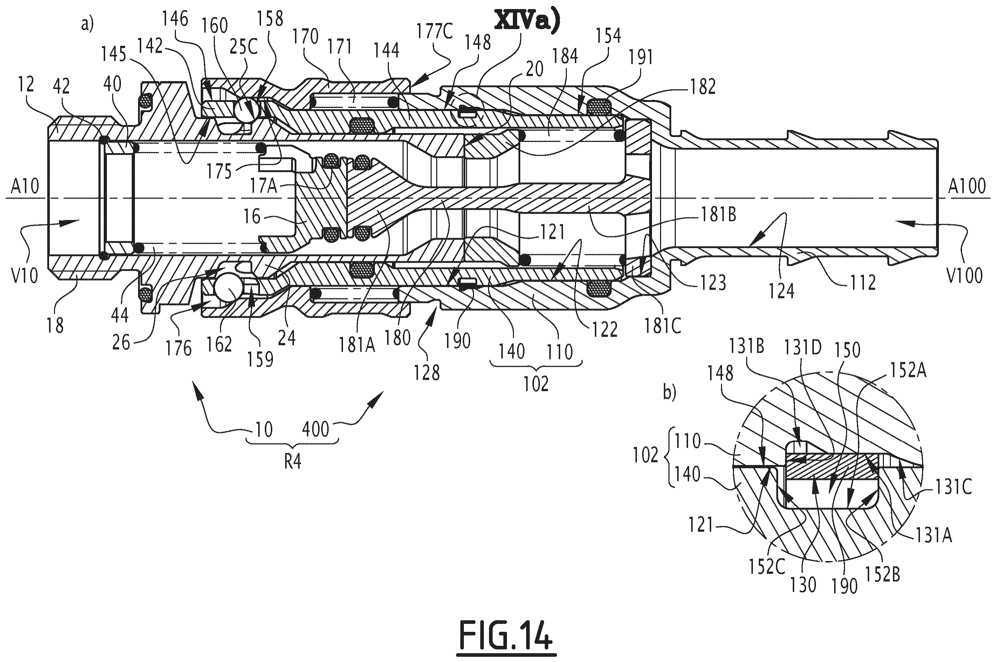

Un raccord fluidique R4, conforme à un quatrième mode de réalisation de l'invention, est représenté en figure 14, en configuration accouplée. Le raccord rapide R4 comprend un élément de raccord fluidique 400, accouplé à l'embout complémentaire 10.

L'élément de raccord fluidique 400 du quatrième mode de réalisation ressemble à l'élément de raccord fluidique 100 du premier mode de réalisation en ce que les billes d'actionnement 162 sont logées dans des logements allongés 159, mais diffère de l'élément de raccord fluidique 100 du premier mode de réalisation en ce que l'élément de raccord fluidique 400 ne comprend pas de bague entretoise 178, ressemblant ainsi à l'élément de raccord fluidique 200 du deuxième mode de réalisation. Ainsi, dans le quatrième mode de réalisation, les premier et deuxième logements d'étanchéité 191A et 192A recevant les premier et deuxième joints 191 et 192 sont des « gorges fermées », comme dans le deuxième mode de réalisation, tandis que la valve 182 en position de fermeture est en butée avant directement contre la partie distale 140. La collerette proximale 181C du piston 180 est intercalée longitudinalement entre la partie distale 140 et la partie proximale 110, dans la mesure où la collerette proximale 181C fait face vers l'arrière à une surface de la partie proximale 110 et vers l'avant à une surface de la partie distale 140.

Dans les premier, deuxième, troisième et quatrième modes de réalisation, la partie proximale 110 est exclusivement disposée autour de la partie distale 140. En d'autres termes, aucune surface de la partie proximale 110 n'est disposée à l'intérieur de la partie distale 140.

La simplicité et la compacité de l'assemblage des parties proximale 110 et distale 140 du corps 102 par l'obstacle déformable 190 ou 390 peuvent être avantageusement mises en œuvre dans un élément de raccord fluidique 100 dont le verrouillage avec l'embout complémentaire 10 en cours d'accouplement n'est pas automatique, en particulier dans un raccord ne comprenant pas de billes d'actionnement. Dans ce cas, il est nécessaire pour l'opérateur de déplacer la bague de verrouillage 170 de la position avancée de retenue à la position reculée de déverrouillage pour accoupler l'élément de raccord fluidique 100 et l'embout complémentaire 10.Les modes de réalisation et les variantes mentionnées ci-dessus peuvent être combinés entre eux pour générer de nouveaux modes de réalisation de l'invention.

## Revendications

1. Élément de raccord fluidique (100 ; 200 ; 300 ; 400), configuré pour être accouplé à un embout complémentaire (10), l'élément de raccord fluidique (100 ; 200 ; 300 ; 400) comprenant :
- un corps (102) délimitant un conduit interne (V100), le conduit interne (V100) s'étendant selon un axe central (A100) et étant configuré pour recevoir l'embout complémentaire (10) par une embouchure avant (104) du corps (102),
- au moins une bille de verrouillage (160), chaque bille de verrouillage (160) étant respectivement reçue dans un premier logement (158) respectif ménagé dans le corps (102) et étant mobile radialement entre :
• une position de verrouillage, dans laquelle la ou chaque bille de verrouillage (160) dépasse dans le conduit interne (V100) et est apte à retenir l'embout complémentaire (10) dans le corps (102), et
• une position de libération, dans laquelle la ou chaque bille de verrouillage (160) ne s'oppose pas au retrait de l'embout complémentaire (10) hors du corps (102),
- une bague de verrouillage (170), qui est montée autour du corps (102) et qui comprend une surface de verrouillage (175), orientée vers l'axe central (A100), la bague de verrouillage (170) étant mobile longitudinalement par rapport au corps (102) entre :
• une position avancée de retenue, dans laquelle la surface de verrouillage (175) maintient chaque bille de verrouillage (160) dans la position de verrouillage, et
• une position reculée de déverrouillage, dans laquelle chaque bille de verrouillage (160) est libre de se déplacer vers la position de libération,
- un ressort de verrouillage (171), qui repousse la bague de verrouillage (170) vers la position avancée de retenue,
dans lequel le corps (102) comprend :
- une partie proximale (110) délimitant une portion proximale du conduit interne (V100) et une terminaison arrière (112) destinée à être reliée à une canalisation (C1), et
- une partie distale (140), qui est monobloc et qui délimite :
• une portion distale du conduit interne (V100) et l'embouchure avant (104), et
• les premiers logements (158),
**caractérisé en ce que** :
- la partie proximale (110) est configurée pour être assemblée à la partie distale (140) par emmanchement de la partie distale (140) dans la partie proximale (110), dans une configuration assemblée du corps (102) dans laquelle aucune surface de la partie proximale (110) ne fait longitudinalement face vers l'arrière à une surface de la partie distale (140),
- l'élément de raccord fluidique (100 ; 200 ; 300 ; 400) comprend aussi un piston (180), une valve (182) et un ressort de valve (184), qui sont logés dans le conduit interne (V100), le piston (180) comprenant une collerette proximale (181C) qui est intercalée longitudinalement entre la partie distale (140) et la partie proximale (110), tandis que la valve (182) est mobile par rapport au piston (180) entre :
• une position avant de fermeture, dans laquelle la valve (182) obture le conduit interne (V100), et
• une position arrière d'ouverture, dans laquelle la valve (182) autorise le passage de fluide dans le conduit interne (V100), le ressort de valve (184) repoussant la valve (182) vers la position avant de fermeture,
- la partie proximale (110) comprend une gorge interne (130) tandis que la partie distale (140) comprend une gorge externe (150) qui fait au moins partiellement face radialement à la gorge interne (130) lorsque le corps (102) est en configuration assemblée,
- l'élément de raccord fluidique (100 ; 200 ; 300 ; 400) comprend aussi un obstacle (190 ; 390), qui est élastiquement déformable, et qui est, lorsque le corps (102) est en configuration assemblée, partiellement reçu dans la gorge externe (150) de la partie distale (140) et dans la gorge interne (130) de la partie proximale (110), l'obstacle (190 ; 390) étant configuré pour coopérer avec une paroi axiale distale (131D) de la gorge interne (130) et une paroi axiale proximale (152B) de la gorge externe (150), de manière à empêcher la séparation des parties distale (140) et proximale (110).

2. Élément de raccord fluidique (100 ; 200 ; 300 ; 400) selon la revendication 1, dans lequel :
- l'élément de raccord fluidique (100 ; 200 ; 300 ; 400) comprend au moins une bille d'actionnement (162), chaque bille d'actionnement (162) étant respectivement reçue dans un deuxième logement (159) ménagé dans la partie distale (140) et étant apte à être repoussée, dans le deuxième logement (159) respectif, par l'embout complémentaire (10) au cours de l'accouplement de l'élément de raccord fluidique (100; 200 ; 300 ; 400) et de l'embout complémentaire (10), de manière à déplacer longitudinalement la bague de verrouillage (170), à l'encontre du ressort de verrouillage (171) :
• depuis la position avancée de retenue, où la bague de verrouillage (170) limite le mouvement de chaque bille d'actionnement (162) à une position où chaque bille d'actionnement (162) dépasse radialement de part et d'autre du corps (102) et où la bague de verrouillage (170) est en butée avant contre au moins une bille d'actionnement (162) ou contre le corps (102), une surface avant (177B) de la bague de verrouillage orientée vers l'avant du corps (102) étant en regard longitudinal de la ou chaque bille d'actionnement,
• vers la position reculée de déverrouillage.

3. Élément de raccord fluidique (100 ; 400) selon la revendication 2, dans lequel :
- chaque deuxième logement (159) présente une forme allongée parallèlement à l'axe central (A100), de sorte que chaque bille d'actionnement (162) est mobile, dans le deuxième logement (159) respectif, au cours de l'accouplement de l'élément de raccord fluidique (100 ; 400) et de l'embout complémentaire (10), suivant un mouvement comprenant une composante longitudinale et une composante radiale à l'axe central (A100).

4. Élément de raccord fluidique (100 ; 200 ; 300 ; 400) selon l'une quelconque des revendications 1 à 3, dans lequel :
- à l'état libre, l'obstacle (190 ; 390) a une dimension radiale maximale externe (D190 ; D390) plus grande qu'en configuration assemblée du corps (102).

5. Élément de raccord fluidique (100 ; 200 ; 300 ; 400) selon l'une quelconque des revendications 1 à 4, dans lequel :
- l'obstacle (190 ; 390) est apte à être entièrement contenu dans la gorge externe (150).

6. Élément de raccord fluidique (100 ; 200 ; 300 ; 400) selon l'une quelconque des revendications 1 à 5, dans lequel :
- lorsque l'obstacle (190 ; 390) est en contact avec la paroi axiale distale (131D) de la gorge interne (130), l'obstacle (190 ; 390) est en contact externe uniquement avec une surface de fond (131A) cylindrique de la gorge interne (130),
- en configuration assemblée du corps (102), la collerette proximale (181C) du piston (180) est configurée pour limiter le rapprochement de la partie distale (140) et de la partie proximale (110) à une configuration où l'obstacle (190 ; 390) est en contact externe uniquement avec la surface de fond (131A) cylindrique de la gorge interne (130).

7. Élément de raccord fluidique (100 ; 200 ; 300 ; 400) selon l'une quelconque des revendications 1 à 6, dans lequel :
- l'obstacle (190 ; 390) est une bague dont une dimension longitudinale (L190) est strictement plus grande qu'une épaisseur radiale (E190) de la bague à l'état libre, de préférence au moins trois fois plus grande.

8. Élément de raccord fluidique (100 ; 200 ; 400) selon l'une quelconque des revendications 1 à 7, dans lequel :
- l'obstacle (190) est une bague fendue.

9. Élément de raccord fluidique (100 ; 200 ; 300 ; 400) selon l'une quelconque des revendications 1 à 8, dans lequel :
- aucune surface de la bague de verrouillage (170) ne fait longitudinalement face vers l'arrière à une surface de la partie distale (140),
- en position avancée de retenue, la bague de verrouillage (170) est en butée avant directement ou indirectement contre le corps (102), et
- une paroi distale (152C) de la gorge externe (150) est décalée vers l'arrière par rapport à une surface d'extrémité arrière (177C) de la bague de verrouillage (170) lorsque la bague de verrouillage est en position avancée de retenue.

10. Élément de raccord fluidique (100 ; 200 ; 300 ; 400) selon l'une quelconque des revendications 1 à 9, dans lequel :
- l'élément de raccord fluidique (100 ; 200 ; 300 ; 400) comprend un premier joint d'étanchéité (191) interposé radialement entre la partie distale (140) et la partie proximale (110), et
- l'obstacle (190 ; 390) est disposé à l'avant par rapport au premier joint (191) en configuration assemblée du corps (102).

11. Élément de raccord fluidique (100) selon l'une quelconque des revendications 1 à 10, dans lequel l'élément de raccord fluidique (100) comprend :
- une bague entretoise (178), qui est intercalée longitudinalement entre la partie distale (140) et la collerette proximale (181C) du piston (180) et engagée à jeu radial réduit dans la partie distale (140),
- un deuxième joint d'étanchéité (192), qui coopère avec la valve (182) en position de fermeture et qui logé dans un deuxième logement d'étanchéité (192A) délimité par :
• une paroi distale (192C) de la partie distale (140),
• une surface de fond (192B) de la partie distale (140) et
• une surface axiale d'extrémité avant (178E) de la bague entretoise (178).

12. Élément de raccord fluidique (100 ; 200 ; 300 ; 400) selon l'une quelconque des revendications 1 à 11, dans lequel :
- le piston (180) comprend, outre la collerette proximale (181C), une tête distale (181A) qui est en regard radial de la valve (182) en position avant de fermeture, un troisième joint (193) étant interposé radialement entre la tête distale (181A) et la valve (182) en position avant de fermeture,
- le piston est monobloc,
- la valve (182) présente une dimension radiale interne minimale (R182) qui est plus grande qu'une dimension radiale externe maximale (R181A) de la tête distale (181A).

13. Élément de raccord fluidique (100 ; 200 ; 300 ; 400) selon l'une quelconque des revendications 1 à 12, dans lequel la partie proximale (110) délimite au moins une première surface radiale interne (121) au niveau de laquelle est formé la gorge interne (130), et dans lequel une dimension longitudinale (L121) de la surface radiale interne (121) en avant de la gorge interne (130) est supérieure à une longueur (L150) de la gorge externe (150).

14. Élément de raccord fluidique (100 ; 200 ; 300 ; 400) selon l'une quelconque des revendications 1 à 13, dans lequel :
- la bague de verrouillage (170) est partiellement disposée autour de la partie proximale (110) du corps (102) ; et
- le ressort de la bague de verrouillage (170) est interposé entre la partie proximale (110) et la bague de verrouillage (170).

15. Raccord fluidique (R1 ; R2 ; R4), comprenant :
- un élément de raccord fluidique (100 ; 200 ; 300 ; 400) conforme à l'une quelconque des revendications 1 à 14, et
- un embout complémentaire (10),
dans lequel l'embout complémentaire (10) comprend :
- une gorge de verrouillage (26), qui est adaptée pour recevoir chaque bille de verrouillage (160) en position de verrouillage en configuration accouplée du raccord fluidique.

## Patentansprüche

1. Fluidisches Anschlusselement (100; 200; 300; 400), das konfiguriert ist, um mit einem komplementären Endstück (10) gekoppelt zu werden, wobei das fluidische Anschlusselement (100; 200; 300; 400) Folgendes umfasst:
- einen Körper (102), der eine innere Leitung (V100) begrenzt, wobei sich die innere Leitung (V100) entlang einer Mittelachse (A100) erstreckt und konfiguriert ist, um das komplementäre Endstück (10) durch eine vordere Mündung (104) des Körpers (102) aufzunehmen,
- mindestens eine Verriegelungskugel (160), wobei jede Verriegelungskugel (160) jeweils in einer entsprechenden ersten Aufnahme (158) in dem Körper (102) aufgenommen ist und radial beweglich ist zwischen:
• eine Verriegelungsposition, in der die oder jede Verriegelungskugel (160) in die innere Leitung (V100) hervorsteht und geeignet ist, um das komplementäre Endstück (10) in dem Körper (102) zu halten, und
• eine Freigabeposition, in der die oder jede Verriegelungskugel (160) einem Herausziehen des komplementären Endstücks (10) aus dem Körper (102) nicht entgegenwirkt,
- einen Verriegelungsring (170), der um den Körper (102) herum montiert ist und der eine Verriegelungsfläche (175) aufweist, die zu der Mittelachse (A100) hin ausgerichtet ist, wobei der Verriegelungsring (170) in Längsrichtung in Bezug auf den Körper (102) beweglich ist zwischen:
• einer vorgeschobenen Halteposition, in der die Verriegelungsfläche (175) jede Verriegelungskugel (160) in der Verriegelungsposition hält, und
• einer zurückgezogenen Entriegelungsposition, in der es jeder Verriegelungskugel (160) möglich ist, sich in die Freigabeposition zu bewegen,
- eine Verriegelungsfeder (171), die den Verriegelungsring (170) wieder in die vorgeschobene Halteposition drückt,
wobei der Körper (102) Folgendes umfasst:
- einen proximalen Abschnitt (110), der einen proximalen Abschnitt der inneren Leitung (V100) und einen hinteren Abschluss (112) begrenzt, der dazu bestimmt ist, mit einem Kanal (C1) verbunden zu werden, und
- einen distalen Abschnitt (140), der einteilig ist und Folgendes begrenzt:
• einen distalen Abschnitt der inneren Leitung (V100) und die vordere Mündung (104), und
• die ersten Aufnahmen (158),
**dadurch gekennzeichnet, dass**:
- der proximale Abschnitt (110) konfiguriert ist, um mit dem distalen Abschnitt (140) durch Einpressen des distalen Abschnitts (140) in den proximalen Abschnitt (110) in einer zusammengebauten Konfiguration des Körpers (102), in der keine Oberfläche des proximalen Abschnitts (110) einer Oberfläche des distalen Abschnitts (140) in Längsrichtung nach hinten zugewandt ist, zusammengebaut zu werden,
- das fluidische Anschlusselement (100; 200; 300; 400) auch einen Kolben (180), ein Ventil (182) und eine Ventilfeder (184) umfasst, die in der inneren Leitung (V100) untergebracht sind, wobei der Kolben (180) einen proximalen Flansch (181C) umfasst, der in Längsrichtung zwischen dem distalen Abschnitt (140) und dem proximalen Abschnitt (110) angeordnet ist, während das Ventil (182) in Bezug auf den Kolben (180) beweglich ist zwischen:
• einer vorderen Schließposition, in der das Ventil (182) die innere Leitung (V100) verschließt, und
• einer hinteren Öffnungsposition, in der das Ventil (182) den Durchgang von Fluid durch die innere Leitung (V100) zulässt, wobei die Ventilfeder (184) das Ventil (182) wieder in die vordere Schließposition drückt,
- der proximale Abschnitt (110) eine innere Nut (130) umfasst, während der distale Abschnitt (140) eine äußere Nut (150) umfasst, die zumindest teilweise der inneren Nut (130) radial gegenüberliegt, wenn der Körper (102) in einer zusammengesetzten Konfiguration ist,
- das fluidische Anschlusselement (100; 200; 300; 400) auch ein Hindernis (190; 390) umfasst, das elastisch verformbar ist und das, wenn der Körper (102) in einer zusammengebauten Konfiguration ist, teilweise in der äußeren Nut (150) des distalen Abschnitts (140) und in der inneren Nut (130) des proximalen Abschnitts (110) aufgenommen ist, wobei das Hindernis (190; 390) konfiguriert ist, um mit einer distalen axialen Wand (131D) der inneren Nut (130) und einer proximalen axialen Wand (152B) der äußeren Nut (150) zusammenzuwirken, um eine Trennung des distalen (140) und des proximalen (110) Abschnitts zu verhindern.

2. Fluidisches Anschlusselement (100; 200; 300; 400) nach Anspruch 1, wobei:
- das fluidische Anschlusselement (100; 200; 300; 400) mindestens eine Betätigungskugel (162) umfasst, wobei jede Betätigungskugel (162) jeweils in einer zweiten Aufnahme (159) in dem distalen Abschnitt (140) aufgenommen ist und geeignet ist, um während des Koppelns des fluidischen Anschlusselements (100; 200; 300; 400) und des komplementären Endstücks (10) durch das komplementäre Endstück (10) in die jeweilige zweite Aufnahme (159) gedrückt zu werden, um den Verriegelungsring (170) gegen die Verriegelungsfeder (171) in Längsrichtung wie folgt zu verschieben:
• aus der vorgeschobenen Halteposition, in der der Verriegelungsring (170) die Bewegung jeder Betätigungskugel (162) begrenzt, in eine Position, in der jede Betätigungskugel (162) auf beiden Seiten des Körpers (102) radial hervorsteht und der Verriegelungsring (170) vorne an mindestens einer Betätigungskugel (162) oder an dem Körper (102) anliegt, wobei eine vordere Fläche (177B) des Verriegelungsrings, die zu der Vorderseite des Körpers (102) gerichtet ist und der oder jeder Betätigungskugel in Längsrichtung gegenüberliegt,
• in Richtung der zurückgezogenen Entriegelungsposition.

3. Fluidisches Anschlusselement (100; 400) nach Anspruch 2, wobei:
- jede zweite Aufnahme (159) eine längliche Form parallel zu der Mittelachse (A100) aufweist, sodass jede Betätigungskugel (162) in der jeweiligen zweiten Aufnahme (159) während des Koppelns des fluidischen Anschlusselements (100; 400) und des komplementären Endstücks (10) entlang einer Bewegung beweglich ist, die eine Längskomponente und eine Komponente radial zu der Mittelachse (A100) umfasst.

4. Fluidisches Anschlusselement (100; 200; 300; 400) nach einem der Ansprüche 1 bis 3, wobei:
- das Hindernis (190; 390) in dem freien Zustand eine größere maximale radiale Außenabmessung (D190; D390) als in der zusammengebauten Konfiguration des Körpers (102) aufweist.

5. Fluidisches Anschlusselement (100; 200; 300; 400) nach einem der Ansprüche 1 bis 4, wobei:
- das Hindernis (190; 390) geeignet ist, um vollständig in der äußeren Nut (150) enthalten zu sein.

6. Fluidisches Anschlusselement (100; 200; 300; 400) nach einem der Ansprüche 1 bis 5, wobei:
- wenn das Hindernis (190; 390) in Kontakt mit der distalen axialen Wand (131D) der inneren Nut (130) ist, das Hindernis (190; 390) nur mit einer zylindrischen Bodenfläche (131A) der inneren Nut (130) in externem Kontakt ist,
- der proximale Flansch (181C) des Kolbens (180) in der zusammengebauten Konfiguration des Körpers (102) konfiguriert ist, um die Annäherung des distalen Abschnitts (140) und des proximalen Abschnitts (110) auf eine Konfiguration zu begrenzen, bei der das Hindernis (190; 390) nur mit der zylindrischen Bodenfläche (131A) der inneren Nut (130) in externem Kontakt ist.

7. Fluidisches Anschlusselement (100; 200; 300; 400) nach einem der Ansprüche 1 bis 6, wobei:
- das Hindernis (190; 390) ein Ring ist, dessen eine Längsabmessung (L190) strikt größer ist als eine radiale Stärke (E190) des Rings in dem freien Zustand, vorzugsweise mindestens dreimal so groß.

8. Fluidisches Anschlusselement (100; 200; 400) nach einem der Ansprüche 1 bis 7, wobei:
- das Hindernis (190) ein geschlitzter Ring ist.

9. Fluidisches Anschlusselement (100; 200; 300; 400) nach einem der Ansprüche 1 bis 8, wobei:
- keine Oberfläche des Verriegelungsrings (170) in Längsrichtung nach hinten einer Fläche des distalen Abschnitts (140) zugewandt ist,
- der Verriegelungsring (170) in der vorgeschobenen Halteposition direkt oder indirekt vorne an dem Körper (102) anliegt, und
- eine distale Wand (152C) der äußeren Nut (150) von einer hinteren Endoberfläche (177C) des Verriegelungsrings (170) nach hinten versetzt ist, wenn der Verriegelungsring in einer vorgeschobenen Halteposition ist.

10. Fluidisches Anschlusselement (100; 200; 300; 400) nach einem der Ansprüche 1 bis 9, wobei:
- das fluidische Anschlusselement (100; 200; 300; 400) eine erste Dichtung (191) umfasst, die radial zwischen dem distalen Abschnitt (140) und dem proximalen Abschnitt (110) angeordnet ist, und
- das Hindernis (190; 390) in der zusammengesetzten Konfiguration des Körpers (102) in Bezug auf die erste Dichtung (191) vorne angeordnet ist.

11. Fluidisches Anschlusselement (100) nach einem der Ansprüche 1 bis 10, wobei das fluidische Anschlusselement (100) Folgendes umfasst:
- einen Abstandsring (178), der in Längsrichtung zwischen den distalen Abschnitt (140) und den proximalen Flansch (181C) des Kolbens (180) eingefügt ist und mit reduziertem radialen Spiel in den distalen Abschnitt (140) eingreift,
- eine zweite Dichtung (192), die in der geschlossenen Position mit dem Ventil (182) zusammenwirkt und in einer zweiten Dichtungsaufnahme (192A) aufgenommen ist, die begrenzt ist durch:
• eine distale Wand (192C) des distalen Abschnitts (140),
• eine Bodenfläche (192B) des distalen Abschnitts (140), und
• eine vordere axiale Endfläche (178E) des Abstandsrings (178).

12. Fluidisches Anschlusselement (100; 200; 300; 400) nach einem der Ansprüche 1 bis 11, wobei:
- der Kolben (180) außer dem proximalen Flansch (181C) einen distalen Kopf (181A) umfasst, der dem Ventil (182) in der vorderen Schließposition radial gegenüberliegt, wobei in der vorderen Schließposition eine dritte Dichtung (193) radial zwischen den distalen Kopf (181A) und das Ventil (182) eingefügt ist,
- der Kolben einteilig ist,
- das Ventil (182) eine minimale innere radiale Abmessung (R182) aufweist, die größer ist als eine maximale äußere radiale Abmessung (R181A) des distalen Kopfs (181A).

13. Fluidisches Anschlusselement (100; 200; 300; 400) nach einem der Ansprüche 1 bis 12, wobei der proximale Abschnitt (110) mindestens eine erste innere radiale Oberfläche (121) begrenzt, an der die innere Nut (130) gebildet ist, und wobei eine Längsabmessung (L121) der inneren radialen Oberfläche (121) vor der inneren Nut (130) größer ist als eine Länge (L150) der äußeren Nut (150).

14. Fluidisches Anschlusselement (100; 200; 300; 400) nach einem der Ansprüche 1 bis 13, wobei:
- der Verriegelungsring (170) teilweise um den proximalen Abschnitt (110) des Körpers (102) angeordnet ist; und
- die Feder des Verriegelungsrings (170) zwischen den proximalen Abschnitt (110) und den Verriegelungsring (170) eingefügt ist.

15. Fluidischer Anschluss (R1; R2; R4), umfassend:
- ein fluidisches Anschlusselement (100; 200; 300; 400) gemäß einem der Ansprüche 1 bis 14, und
- ein komplementäres Endstück (10),
wobei das komplementäre Endstück (10) Folgendes umfasst:
- eine Verriegelungsnut (26), die angepasst ist, um in der Verriegelungsposition in der gekoppelten Konfiguration des fluidischen Anschlusses jede Verriegelungskugel (160) aufzunehmen.

## Claims

1. A fluidic coupling element (100; 200; 300; 400) configured to be coupled to a mating end-piece (10), the fluidic coupling element (100; 200; 300; 400) comprising:
- a body (102) defining an internal conduit (V100), the internal conduit (V100) extending along a central axis (A100) and configured to accommodate the mating end-piece (10) through a front mouth (104) of the body (102),
- at least one locking ball (160), each locking ball (160) being accommodated, respectively, in a respective first housing (158) in the body (102) and being radially movable between:
• a locking position, wherein the or each locking ball (160) protrudes into the internal conduit (V100) and is apt to retain the mating end-piece (10) in the body (102), and
• a release position, wherein the or each locking ball (160) does not prevent the removal of the mating end-piece (10) from the body (102),
- a locking ring (170), which is mounted around the body (102) and which comprises a locking surface (175), oriented toward the central axis (A100), the locking ring (170) being longitudinally movable relative to the body (102) between:
• an advanced retaining position, wherein the locking surface (175) holds each locking ball (160) in the locking position, and
• a retracted unlocking position, wherein each locking ball (160) is free to move toward the release position,
- a locking spring (171), which pushes the locking ring (170) toward the advanced retaining position,
wherein the body (102) comprises:
- a proximal part (110) delimiting a proximal part of the internal conduit (V100) and a rear ending (112) intended for being coupled to a conduit (C1), and
- a distal part (140), which is in one-piece and delimits:
• a distal part of the internal conduit (V100) and the front mouth (104), and
• the first housings (158),
**characterized in that** the proximal part (110) being configured to be joined to the distal part (140) by fitting the distal part (140) into the proximal part (110), in an assembled configuration of the body (102) wherein no surface of the proximal part (110) longitudinally faces rearwards a surface of the distal part (140),
**in that** the fluidic coupling element (100; 200; 300; 400) further comprises a piston (180), a valve (182) and a valve spring (184), which are housed in the internal conduit (V100), the piston (180) including a proximal collar flange (181C) which is longitudinally interposed between the distal part (140) and the proximal part (110), whereas the valve (182) is movable relative to the piston (180) between:
- a forward closing position, wherein the valve (182) closes the internal conduit (V100), and
- a rear opening position, wherein the valve (182) permits the passage of fluid into the internal conduit (V100), the valve spring (184) pushing the valve (182) back toward the front closing position,
the proximal part (110) comprising an internal groove (130) whereas the distal part (140) comprises an external groove (150) that faces radially the internal groove (130) at least partially, when the body (102) is in the assembled configuration,
and **in that** the fluidic coupling element (100; 200; 300; 400) further comprises an obstacle (190; 390), which is elastically deformable and which, when the body (102) is in the assembled configuration, is partially accommodated in the external groove (150) of the distal part (140) and in the internal groove (130) of the proximal part (110), the obstacle (190; 390) being configured to cooperate with a distal axial wall (131D) of the internal groove (130) and a proximal axial wall (152B) of the external groove (150) so as to prevent the separation of the distal (140) and proximal (110) portions.

2. The fluidic coupling element (100; 200; 300; 400) according to claim 1, wherein:
- the fluidic coupling element (100; 200; 300; 400) comprises at least one actuating ball (162), each actuating ball (162) being respectively accommodated in a second housing (159) provided in the distal part (140) and being apt to be pushed into the respective second housing (159), by the mating end-piece (10) during coupling of the fluidic coupling element (100; 200; 300; 400) and of the mating end-piece (10), so as to move the locking ring (170) longitudinally against the locking spring (171):
• from the advanced retaining position, where the locking ring (170) limits the movement of each actuating ball (162) to a position where each actuating ball (162) protrudes radially on either side of the body (102) and the locking ring (170) abuts forward against at least one actuating ball (162) or against the body (102), a front surface (177B) of the locking ring oriented towards the front of the body (102) longitudinally facing the actuating ball or each actuating ball,
• to the retracted unlocked position.

3. The coupling fluidic element (100; 400) according to claim 2, wherein:
- each second housing (159) has an elongated shape parallel to the central axis (A100), so that each actuating ball (162) is movable in the respective second housing (159) during coupling of the fluidic coupling element (100; 400) and of the mating end-piece (10), following a movement comprising a longitudinal component and a radial component to the central axis (A100).

4. The fluidic coupling element (100; 200; 300; 400) according to any one of claims 1 to 3, wherein:
- in the free state, the obstacle (190; 390) has a larger external maximum radial dimension (D190; D390) than in the assembled configuration of the body (102).

5. The fluidic coupling element (100; 200; 300; 400) according to any one of claims 1 to 4, wherein:
- the obstacle (190; 390) is apt to be entirely contained in the external groove (150).

6. The fluidic coupling element (100; 200; 300; 400) according to any one of claims 1 to 5, wherein:
- when the obstacle (190; 390) is in contact with the distal axial wall (131D) of the internal groove (130), the obstacle (190; 390) is in external contact only with a cylindrical bottom surface (131A) of the internal groove (130),
- in the assembled configuration of the body (102), the proximal flange (181C) of the piston (180) is configured to limit the approach of the distal part (140) and the proximal part (110) to a configuration where the obstacle (190; 390) is in external contact only with the cylindrical bottom surface (131A) of the internal groove (130).

7. The fluidic coupling element (100; 200; 300; 400) according to any one of claims 1 to 6, wherein:
- the obstacle (190; 390) is a ring the longitudinal dimension (L190) of which is strictly greater than a radial thickness (E190) of the ring in the free state, preferably at least three times greater.

8. The fluidic coupling element (100; 200; 400) according to any one of claims 1 to 7, wherein:
- the obstacle (190) is a split ring.

9. The fluidic coupling element (100; 200; 300; 400) according to any one of claims 1 to 8, wherein:
- no surface of the locking ring (170) longitudinally faces rearwards from a surface of the distal part (140),
- in the advanced retaining position, the locking ring (170) is directly or indirectly in front abutment against the body (102), and
- a distal wall (152C) of the external groove (150) is shifted rearwards relative to a rear end surface (177C) of the locking ring (170) when the locking ring is in an advanced retaining position.

10. The fluidic coupling element (100; 200; 300; 400) according to any one of claims 1 to 9, wherein:
- the fluidic coupling member (100; 200; 300; 400) comprises a first seal (191) radially interposed between the distal part (140) and the proximal part (110), and
- the obstacle (190; 390) is arranged at the front with respect to the first seal (191) in the assembled configuration of the body (102).

11. The fluidic coupling element (100) according to any one claims 1 to 10, wherein the fluidic coupling element (100) comprises:
- a spacer ring (178) which is longitudinally interposed between the distal part (140) and the proximal collar flange (181C) of the piston (180) and engaged with reduced radial play in the distal part (140),
- a second seal (192) which cooperates with the valve (182) in the closing position and which is housed in a second seal housing (192A) delimited by:
• a distal wall (192C) of the distal part (140),
• a bottom surface (192B) of the distal part (140) and
• a front end axial surface (178E) of the spacer ring (178).

12. The fluidic coupling element (100; 200; 300; 400) according to any one of claims 1 to 11, wherein:
- the piston (180) comprises, in addition to the proximal collar flange (181C), a distal head (181A) which is radially opposite the valve (182) in the forward closing position, a third seal (193) being interposed radially between the distal head (181A) and the valve (182) in the front closing position,
- the piston is in one-piece,
- the valve (182) has a minimum internal radial dimension (R182) that is greater than a maximum external radial dimension (R181A) of the distal head (181A).

13. The fluidic coupling element (100; 200; 300; 400) according to any one of claims 1 to 12, wherein the proximal part (110) delimits at least one first internal radial surface (121) at which the internal groove (130) is formed, and wherein a longitudinal dimension (L121) of the internal radial surface (121) in front of the internal groove (130) is greater than a length (L150) of the external groove (150).

14. The fluidic coupling element (100; 200; 300; 400) according to any one of claims 1 to 13, wherein:
- the locking ring (170) is partially arranged around the proximal part (110) of the body (102); and
- the locking ring spring (170) is interposed between the proximal part (110) and the locking ring (170).

15. A fluidic coupling (R1; R2; R4), comprising:
- a fluidic coupling element (100; 200; 300; 400) according to any one of claims 1 to 14, and
- a mating end-piece (10),
wherein the mating end-piece (10) comprises:
- a locking groove (26) which is suitable for accommodating each locking ball (160) in a locking position in a coupled configuration of the fluidic coupling.
